(19) Europäisches Patentamt / European Patent Office / Office européen des brevets

(11) **EP 3 140 628 B1**

(12) **EUROPÄISCHE PATENTSCHRIFT**

(45) Veröffentlichungstag und Bekanntmachung des Hinweises auf die Patenterteilung:
**09.08.2023  Patentblatt 2023/32**

(21) Anmeldenummer: **15724539.0**

(22) Anmeldetag: **08.05.2015**

(51) Internationale Patentklassifikation (IPC):
**G01J 1/42** *(2006.01)*    **G01J 1/04** *(2006.01)*
**H05G 2/00** *(2006.01)*

(52) Gemeinsame Patentklassifikation (CPC):
**G01J 1/4257; G01J 1/0418; H05G 2/005;**
**H05G 2/008;** B23K 26/705

(86) Internationale Anmeldenummer:
**PCT/EP2015/060145**

(87) Internationale Veröffentlichungsnummer:
**WO 2015/169937 (12.11.2015 Gazette 2015/45)**

(54) **SYSTEM UND VERFAHREN ZUR ANALYSE EINES VON EINER STRAHLFÜHRUNGSOPTIK GEFÜHRTEN LICHTSTRAHLS**

SYSTEM AND METHOD FOR ANALYZING A LIGHT BEAM CONDUCTED BY A BEAM-CONDUCTING OPTICAL UNIT

SYSTÈME ET PROCÉDÉ D'ANALYSE D'UN FAISCEAU LUMINEUX GUIDÉ PAR UNE OPTIQUE DE GUIDAGE DE FAISCEAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2014   DE 102014208792**

(43) Veröffentlichungstag der Anmeldung:
**15.03.2017   Patentblatt 2017/11**

(73) Patentinhaber: **Carl Zeiss SMT GmbH**
**73447 Oberkochen (DE)**

(72) Erfinder:
• **MANGER, Matthias**
**73432 Aalen-Unterkochen (DE)**
• **BAUMER, Florian**
**73447 Oberkochen (DE)**

(74) Vertreter: **Frank, Hartmut**
**Bonsmann Bonsmann Frank**
**Patentanwälte**
**Reichspräsidentenstraße 21-25**
**45470 Mülheim a. d. Ruhr (DE)**

(56) Entgegenhaltungen:
**US-A- 3 538 335    US-A- 4 037 959**
**US-A- 5 329 350**

**Beschreibung**

Die vorliegende Anmeldung beansprucht die Priorität der Deutschen Patentanmeldung DE 10 2014 208 792.9, angemeldet am 09. Mai 2014.

HINTERGRUND DER ERFINDUNG

Gebiet der Erfindung

Die Erfindung betrifft ein System und ein Verfahren zur Analyse eines von einer Strahlführungsoptik geführten Lichtstrahls. Die Erfindung ist insbesondere einsetzbar, um einen Lichtstrahl (insbesondere einen Laserstrahl) z.B. in seiner Position und/oder in seinen Fokussiereigenschaften zu analysieren und um Aufschluss sowohl über die geometrischen Strahlparameter als auch über die Strahlqualität zu erlangen.

Die Erfindung ist insbesondere zur Analyse elektromagnetischer Strahlung geeignet, wie sie z.B. in Laserplasmaquellen (etwa bei einer EUV-Quelle einer mikrolithographischen Projektionsbelichtungsanlage) eingesetzt wird, jedoch nicht hierauf beschränkt. In weiteren Anwendungen ist die Erfindung auch allgemein dazu geeignet, elektromagnetische Strahlung, die zu beliebigen (insbesondere Mess-)Zwecken eingesetzt wird, zu analysieren.

Stand der Technik

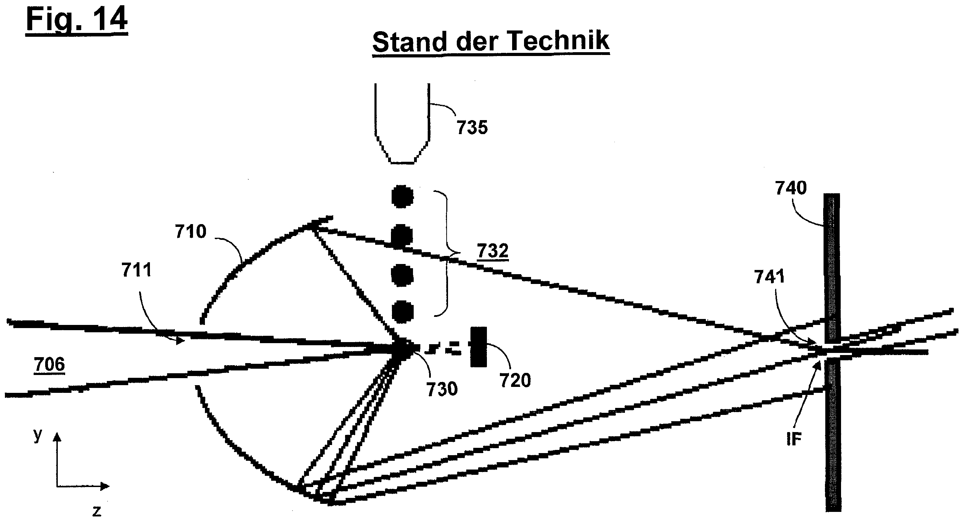

Laserplasmaquellen werden z.B. zur Anwendung in der Lithographie eingesetzt. So erfolgt etwa im Betrieb einer für den EUV-Bereich (z.B. bei Wellenlängen von z.B. etwa 13 nm oder etwa 7 nm) ausgelegten Projektionsbelichtungsanlage die Erzeugung des benötigten EUV-Lichtes mittels einer auf einer Plasma-Anregung basierenden EUV-Lichtquelle, zu der Fig. 14 einen beispielhaften herkömmlichen Aufbau zeigt.

Diese EUV-Lichtquelle weist zunächst einen (nicht gezeigten) Hochenergielaser z.B. zur Erzeugung von Infrarotstrahlung 706 (z.B. $CO_2$-Laser mit einer Wellenlänge von $\lambda \approx 10.6\ \mu m$) auf, welche über eine Fokussieroptik fokussiert wird, durch eine in einem als Ellipsoid ausgebildeten Kollektorspiegel 710 vorhandene Öffnung 711 hindurchtritt und auf ein mittels einer Targetquelle 735 erzeugtes und einer Plasmazündungsposition 730 zugeführtes Targetmaterial 732 (z.B. Zinntröpfchen) gelenkt wird. Die Infrarotstrahlung 706 heizt das in der Plasmazündungsposition 730 befindliche Targetmaterial 732 derart auf, dass dieses in einen Plasmazustand übergeht und EUV-Strahlung abgibt. Diese EUV-Strahlung wird über den Kollektorspiegel 710 auf einen Zwischenfokus IF (= "Intermediate Focus") fokussiert und tritt durch diesen in eine nachfolgende Beleuchtungseinrichtung, deren Umrandung 740 lediglich angedeutet ist und die für den Lichteintritt eine freie Öffnung 741 aufweist, ein.

Von wesentlicher Bedeutung für die in einer EUV-Lichtquelle bzw. Laserplasmaquelle erzielbare Dosisstabilität bzw. zeitliche Stabilität der EUV-Abstrahlcharakteristik und die realisierbare EUV-Lichtausbeute ist dabei, dass die mit zunehmendem Lichtbedarf sehr schnell (z.B. mit einer Injektionsrate im Bereich von 100 kHz bzw. in einem zeitlichen Abstand von z.B. 10 $\mu$s) in die Laserplasmaquelle "einfliegenden" Zinntröpfchen individuell hochgenau (z.B. mit einer Genauigkeit unterhalb von 1 $\mu$m) und reproduzierbar von dem das Tröpfchen zerstäubenden Laserstrahl getroffen werden. Dies erfordert im o.g. Aufbau wiederum eine hochgenaue Einstellung der Tröpfchenposition sowie eine hochgenaue Nachführung der z.B. vom $CO_2$-Laser erzeugten Infrarotstrahlung 706.

Sowohl die Bestimmung der Tröpfchenposition als auch die Bestimmung der Fokuslage der entsprechend nachzuführenden Laserstrahlen können mit einer sogenannten Strahlpropagationskamera erfolgen, wobei sowohl die Laserstrahlen in "Vorwärtsrichtung" (d.h. die Infrarotstrahlung 706 vor dem Auftreffen auf die jeweiligen Target-Tröpfchen) als auch die Laserstrahlen in "Rückwärtsrichtung" (d.h. die von dem jeweiligen Target-Tröpfchen zurückreflektierte Infrarotstrahlung 706) erfasst und die für die Laserstrahl- sowie Tröpfchenführung benötigten Messdaten gewonnen werden.

Hierbei tritt in der Praxis u.a. das Problem auf, dass die von den Target-Tröpfchen zurückreflektierte Infrarotstrahlung 706 vergleichsweise intensitätsschwach ist, was eine exakte messtechnische Erfassung der Tröpfchenposition und damit auch die hochgenaue Nachführung der vom $CO_2$-Laser erzeugten Infrarotstrahlung 706 erschwert. Zum Stand der Technik wird beispielhaft auf US 8,237,922 B2 und US 5,329,350 verwiesen.

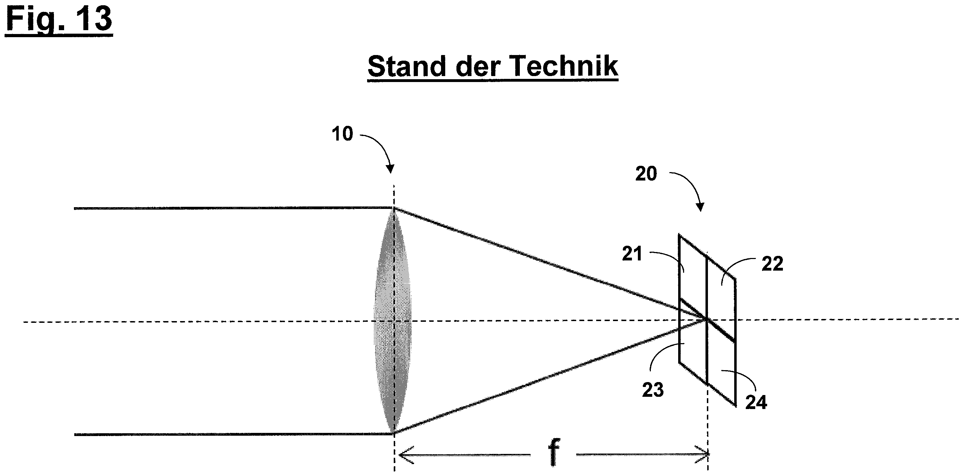

Fig. 13 dient zur Erläuterung eines möglichen herkömmlichen Ansatzes zur Lichtstrahlanalyse. Dabei wird der zu analysierende Lichtstrahl mit einer FokussierLinse 10 auf einen in deren bildseitiger Brennebene angeordneten Vier-Quadrantensensor 20 fokussiert, welcher aus vier die Lichtintensität messenden Sensoren 21-24 zusammengesetzt ist, wobei die Position des Lichtstrahls aus Verrechnung der mit diesen vier Sensoren 21-24 gemessenen Lichtintensitäten bestimmt wird.

Hierbei tritt jedoch bei der zuvor beschriebenen Anwendung der Analyse etwa der Infrarotstrahlung in einer EUV-Lichtquelle bzw. Laserplasmaquelle in der Praxis das Problem auf, dass der zu messende Lichtstrahl mit starken Variationen beaufschlagt ist, wobei sich insbesondere die Divergenz des Lichtstrahls bei einem Defokus des Licht- bzw.

Laserstrahls in Bezug auf das Target-Tröpfchen sowie sich die Richtung des Lichtstrahls (entsprechend einem "Pointing" des Strahls) ändern und wobei zudem auch ein laterales Verschieben des Strahls auftritt.

US 4 037 959 A offenbart u.a eine Anordnung zur Echtzeit-Charakterisierung einer Laserquelle, wobei die von einem Kollektor bzw. Empfänger ("Receiver") aufgenommene Strahlung u.a. über Filter mit keilförmiger Geometrie bzw. linearem Transmissionsverlauf auf Detektoren gelenkt wird, wobei der Strahl in eine Mehrzahl von Kanälen aufgeteilt wird und wobei u.a. Amplitude und Pulsbreite sowie optische Frequenz der Strahlung bestimmt werden.

US 3 538 335 A offenbart u.a. ein Beleuchtungsregelungssystem zur Regelung der auf eine Photo-Oberfläche durchgelassenen Lichtintensität mit einem vor einem Bildempfänger angeordneten variablen Graufilter.

US 5 329 350 A offenbart u.a. ein System zur Messung von Laserstrahlparametern mit im Strahlengang vor einer Messanordnung angeordneten Filtern von keilförmiger Geometrie, welche quer zur Lichtausbreitungsrichtung beweglich angeordnet sind.

ZUSAMMENFASSUNG DER ERFINDUNG

Aufgabe der vorliegenden Erfindung ist es, ein System und ein Verfahren zur Analyse eines von einer Strahlführungsoptik geführten Lichtstrahls bereitzustellen, welche eine möglichst exakte Lichtstrahlanalyse (z.B. Strahlpositionsbestimmung) bei möglichst geringer Sensitivität auf die vorstehend genannten parasitären Strahlvariationen ermöglichen.

Diese Aufgabe wird gemäß den Merkmalen der unabhängigen Patentansprüche gelöst.

Ein erfindungsgemäßes System zur Analyse eines von einer Strahlführungsoptik geführten kollimierten Lichtstrahls weist auf:

- eine durch eine erste Fokussierlinse mit einer ersten Brennweite ($f_1$) gebildete erste Fourier-Optik;

- eine Grauverlaufsfilter-Anordnung, welche bezogen auf den Strahlengang nach der ersten Fokussierlinse im Abstand der ersten Brennweite ($f_1$) angeordnet ist;

- eine durch eine zweite Fokussierlinse mit einer zweiten Brennweite ($f_2$) gebildete zweite Fourier-Optik, welche bezogen auf den Strahlengang nach der Grauverlaufsfilter-Anordnung im Abstand der zweiten Brennweite ($f_2$) angeordnet ist; und

- eine Lichtintensitätssensor-Anordnung, welche bezogen auf den Strahlengang nach der zweiten Fokussierlinse im Abstand der zweiten Brennweite ($f_2$) angeordnet ist, wobei die Lichtintensitätssensor-Anordnung mindestens einen Lichtintensitätssensor aufweist;

- wobei die Lichtintensitätssensor-Anordnung derart ausgestaltet ist, dass diese für jeden Grauverlaufsfilter der Grauverlaufsfilter-Anordnung jeweils die durch diesen Grauverlaufsfilter transmittierte Lichtintensität misst; und

- wobei die Grauverlaufsfilter-Anordnung einen ersten Grauverlaufsfilter mit linearem Transmissionsverlauf in einer ersten Raumrichtung und einen zweiten Grauverlaufsfilter mit linearem Transmissionsverlauf in einer von der ersten Raumrichtung verschiedenen zweiten Raumrichtung aufweist, und/oder wobei die Grauverlaufsfilter-Anordnung wenigstens einen Grauverlaufsfilter mit einem zumindest in einer vorbestimmten Raumrichtung parabelförmigen Transmissionsverlauf aufweist.

Der Erfindung liegt insbesondere das Konzept zugrunde, einen Filter mit örtlich variierender Transmission - welcher hier und im Folgenden kurz als "Grauverlaufsfilter" bezeichnet wird - in der Fernfeldebene einer Strahlführungsoptik, insbesondere in einem sogenannten "2f-2f'-Aufbau" wie etwa einem Kepler-Teleskop-Aufbau, zu platzieren und so zunächst die den auf das System auftreffenden, zu analysierenden Lichtstrahl charakterisierende Information (z.B. eine zu bestimmende Positionsinformation des Lichtstrahls) in eine reine Intensitätsinformation zu übersetzen. Das durch den Grauverlaufsfilter transmittierte Licht wird sodann auf einem in der Nahfeldebene der Strahlführungsoptik angeordneten Lichtintensitätssensor gesammelt, der ausschließlich die Intensität als Integral über die Sensorfläche misst.

Durch diesen Ansatz wird insbesondere erreicht, dass die eingangs erwähnten parasitären Strahlvariationen (wie z.B. Divergenzen etc.), welche beispielsweise im Betrieb einer EUV-Lichtquelle bzw. Laserplasmaquelle auftreten, sich am Ort der Lichtintensitätssensor-Anordnung nicht nennenswert auswirken. Dies ist insofern von großer Bedeutung, als die insbesondere für den Anwendungsfall mit einer Wellenlänge des zu analysierenden Lichtstrahls im langwelligen Infrarotbereich verfügbaren Intensitätssensoren (welche z.B. auf einem Quecksilber-Cadmium-Tellurit-Materialsystem basieren können) infolge der auftretenden Sättigung eine ausgeprägte nichtlineare Charakteristik aufweisen und zudem auch räumlich inhomogen sind. Dabei erweist es sich erfindungsgemäß als besonders vorteilhaft, dass das zu analysierende Licht aufgrund der Platzierung der Lichtintensitätssensor-Anordnung im optischen Nahfeld (d.h. einer Pupillenebene mit in diesem Bereich kollimiertem Lichtstrahl) hinreichend verdünnt bzw. maximal breit verteilt ist mit der Folge, dass die vorstehend beschriebenen parasitären Strahlvariationen in dieser Nahfeldebene nicht als Variationen auf der Lichtintensitätssensor-Anordnung durchschlagen bzw. auf dem jeweiligen Lichtintensitätssensor nicht zur Geltung kommen oder zumindest hinreichend stark unterdrückt werden.

Mit anderen Worten beinhaltet die Erfindung insbesondere das Konzept, eine Lichtstrahlanalyse im langwelligen Infrarotbereich trotz der in diesem Wellenlängenbereich nur sehr begrenzt verfügbaren Sensorik dadurch zu verwirklichen, dass die Verwendung eines allein die Intensität messenden und in einer Nahfeldebene platzierten Lichtintensitätssensors (bzw. einer Anordnung aus einer Mehrzahl solcher Lichtintensitätssensoren) mit dem Einsatz eines Grauverlaufsfilters (bzw. einer Anordnung aus einer Mehrzahl von Grauverlaufsfiltern) in der Feldebene bzw. Fernfeldebene kombiniert und so erreicht wird, dass die Positionsbestimmung ohne die bereits diskutierten Störungen erfolgen kann, da die besagten Störungen in der Nahfeldebene bzw. am Ort des Lichtintensitätssensors nicht mehr wirksam sind.

Unter Strahlführungsoptik wird im Sinne der vorliegenden Anmeldung ein optisches System verstanden, welches dem eigentlichen zur Analyse dienenden System vorgelagert ist und den zu analysierenden Lichtstrahl dem zur Analyse dienenden System von einem übergeordneten, den Lichtstrahl erzeugenden bzw. definierenden System (z.B. einer EUV-Lichtquelle oder einem materialbearbeitenden System) zuführt. Das übergeordnete System weist in diesem Falle bereits wenigstens eine Nahfeldebene und wenigstens eine Fernfeldebene auf, wobei die Strahlführungsoptik hierzu jeweils konjugierte Ebenen (d.h. ebenfalls wenigstens eine Nahfeldebene und wenigstens eine Fernfeldebene) bereitstellt, an welche das zur Analyse dienende System ankoppelt.

Als Nahfeld wird die Amplituden-/Intensitätsverteilung in einer Schnittebene senkrecht zur Ausbreitungsrichtung im Regime des kollimierten (aufgeweiteten = nahezu divergenzfreien) Strahls bezeichnet. Das Fernfeld hingegen entspricht der Amplituden-/Intensitätsverteilung in einer taillen- bzw. fokusnahen Ebene senkrecht zur Strahlausbreitung im Regime des fokussierten bzw. konvergenten Strahls. Die Erzeugung eines fokussierten Strahls aus dem kollimierten Strahl und umgekehrt erfolgt üblicherweise über Fourier-Optiken. Die Begriffe "Nahfeldebene" und "Fernfeldebene" werden hierbei analog zu den Begriffen "Pupillenebene" bzw. "Feldebene" eines abbildenden optischen Systems verwendet.

Die Formulierungen, wonach die Grauverlaufsfilter-Anordnung in einer Fernfeldebene der Strahlführungsoptik angeordnet ist und die Lichtintensitätssensor-Anordnung in einer Nahfeldebene der Strahlführungsoptik angeordnet ist, sind jeweils so zu verstehen, dass auch geringfügige Abweichungen von der exakten Anordnung in der betreffenden Ebene umfasst sein sollen, insbesondere solange die Anordnung noch im jeweiligen Tiefenschärfebereich erfolgt.

Gemäß einer Ausführungsform weist das System in einem Kepler-Teleskop-Aufbau eine erste Fourier-Optik und eine zweite Fourier-Optik auf, wobei die Fernfeldebene der Strahlführungsoptik sich bezogen auf den optischen Strahlengang zwischen der ersten und zweiten Fourier-Optik befindet und wobei die Nahfeldebene der Strahlführungsoptik sich bezogen auf den optischen Strahlengang nach der zweiten Fourier-Optik befindet.

Gemäß der Erfindung weist die Grauverlaufsfilter-Anordnung einen ersten Grauverlaufsfilter mit linearem Transmissionsverlauf in einer ersten Raumrichtung und einen zweiten Grauverlaufsfilter mit linearem Transmissionsverlauf in einer von der ersten Raumrichtung verschiedenen zweiten Raumrichtung auf, und/oder der Grauverlaufsfilter weist einen zumindest in einer vorbestimmten Raumrichtung parabelförmigen Transmissionsverlauf auf, um - wie im Weiteren noch näher erläutert - alternativ oder zusätzlich zur Strahlposition die Spotgröße des zu analysierenden Lichtstrahls zu bestimmen. Dabei kann insbesondere die zweite Raumrichtung zur ersten Raumrichtung senkrecht sein, um etwa (für eine Lichtausbreitungsrichtung entlang der z-Richtung im Koordinatensystem) sowohl die x-Komponente als auch die y-Komponente der Strahlposition bestimmen zu können.

Insbesondere kann, wie im Weiteren noch detaillierter beschrieben, zur Bestimmung der Strahlposition eine Grauverlaufsfilter-Anordnung aus drei Grauverlaufsfiltern in Kombination mit einer Lichtintensitätssensor-Anordnung aus drei Lichtintensitätssensoren eingesetzt werden, wobei (für eine Lichtausbreitungsrichtung entlang der z-Richtung im Koordinatensystem) ein erster Grauverlaufsfilter einen in x-Richtung linearen Transmissionsverlauf, ein zweiter Grauverlaufsfilter einen in y-Richtung linearen Transmissionsverlauf und ein dritter der Grauverlaufsfilter zwecks Intensitätsnormierung einen konstanten Transmissionsverlauf aufweist.

Gemäß einer Ausführungsform besitzt wenigstens ein Grauverlaufsfilter einen Transmissionsverlauf mit rotationsparaboloidförmiger oder sattelförmiger Geometrie.

Gemäß einer Ausführungsform besitzt wenigstens ein Grauverlaufsfilter zur Ermöglichung einer Intensitätsnormierung einen konstanten Transmissionsverlauf. Eine solche Intensitätsnormierung ermöglicht es, etwaige Intensitätsschwankungen des Licht- bzw. Laserstrahls zu berücksichtigen und von den von einer Positionsänderung des zu analysierenden Lichtstrahls herrührenden Intensitätsschwankungen zu unterscheiden. Hierdurch wird dem Umstand Rechnung getragen, dass Intensitätsschwankungen im zu analysierenden Lichtstrahl zu Schwankungen der gemessenen Intensitätssignale und damit zu Verfälschungen der gewünschten Positionsinformation führen können. Zur Elimination des Einflusses der Laserschwankungen kann somit ein Referenzsignal gemessen werden, welches allein die integrale Intensität repräsentiert, und die Signale zur Gewinnung der Strahlparameter des zu analysierenden Lichtstrahls können auf dieses Referenzsignal normiert werden.

Die Erfindung ist jedoch nicht auf die Verwendung eines solchen (zusätzlichen) Grauverlaufsfilters mit konstantem Transmissionsverlauf beschränkt, da die zur Intensitätsnormierung erforderliche Intensitätsinformation des zu analysierenden Lichtstrahls grundsätzlich auch anderweitig bereitgestellt werden kann.

Gemäß einer Ausführungsform weist die Grauverlaufsfilter-Anordnung ein Array aus einer Mehrzahl von Grauverlaufsfiltern auf. Des Weiteren kann die Lichtintensitätssensor-Anordnung ein Array aus einer Mehrzahl von Lichtintensitätssensoren aufweisen.

Gemäß einer Ausführungsform ist wenigstens ein Grauverlaufsfilter aus Binärstrukturen gebildet, wobei die Strukturgrößen dieser Binärstrukturen kleiner als die Wellenlänge des zu analysierenden Lichtstrahls sind. Unter der Bildung eines Grauverlaufsfilters aus Binärstrukturen wird hierbei die Bildung aus Strukturen verstanden, welche für die jeweils auftreffende, zu analysierende Strahlung entweder vollständig absorbierend oder vollständig reflektierend sind. Mittels einer solchen Ausgestaltung kann erreicht werden, dass gemittelt über einen bestimmten Bereich (etwa entsprechend der Spotgröße des zu analysierenden Lichtstrahls) im Mittel effektive Transmissionswerte bzw. Grauwerte zwischen Null und Eins erhalten werden, womit im Ergebnis ein gewünschter Transmissionsverlauf (z.B. ein in einer vorbestimmten Raumrichtung linearer Transmissionsverlauf) mit hoher Genauigkeit realisiert werden kann.

Hierdurch wird dem Umstand Rechnung getragen, dass bei dem erfindungsgemäßen Konzept vergleichsweise hohe Anforderungen an die Güte des bzw. der eingesetzten Grauverlaufsfilter(s) zu stellen sind, da diese die bei der Positionsmessung erzielte Genauigkeit unmittelbar bestimmt und etwaige Transmissionsverlaufsschwankungen entsprechende Messfehler in der Strahlanalyse zur Folge haben.

Gemäß einer Ausführungsform weist das System eine bezogen auf die Lichtausbreitungsrichtung stromaufwärts der Grauverlaufsfilter-Anordnung angeordnete strahlaufspaltende Struktur (z.B. ein optisches Gitter) zur Aufspaltung des zu analysierenden Lichtstrahls in eine Mehrzahl von Teilstrahlen auf, wodurch der zu analysierende Lichtstrahl zunächst in Teilstrahlen mit übereinstimmenden optischen Eigenschaften repliziert werden kann, wobei diese Teilstrahlen dann durch die jeweils nachfolgenden Graufilter-Lichtintensitätssensor-Kombinationen separat zur Ermittlung unterschiedlicher Strahlinformationen analysiert werden können. In weiteren Ausgestaltungen kann die strahlaufspaltende Struktur auch ein oder mehrere Prismen oder Spiegel aufweisen. Die strahlaufspaltende (z.B. diffraktive) Struktur ist vorzugsweise in einer Nahfeldebene der Strahlführungsoptik angeordnet.

Gemäß einer Ausführungsform ist der zu analysierende Lichtstrahl ein Laserstrahl, insbesondere ein Laserstrahl mit einer Wellenlänge im Infrarotbereich.

Die Erfindung betrifft weiter auch ein Verfahren zur Analyse eines von einer Strahlführungsoptik geführten kollimierten Lichtstrahls

- wobei ein zu analysierender Lichtstrahl über eine durch eine erste Fokussierlinse mit einer ersten Brennweite ($f_1$) gebildete erste Fourier-Optik auf eine bezogen auf den Strahlengang nach der ersten Fokussierlinse im Abstand der ersten Brennweite ($f_1$) befindliche Grauverlaufsfilter-Anordnung fokussiert wird;

- wobei bezogen auf den Strahlengang nach der GrauverlaufsfilterAnordnung eine durch eine zweite Fokussierlinse mit einer zweiten Brennweite ($f_2$) gebildete zweite Fourier-Optik im Abstand der zweiten Brennweite ($f_2$) angeordnet ist; und

- wobei eine Lichtintensitätssensor-Anordnung, welche bezogen auf den Strahlengang nach der zweiten Fokussierlinse im Abstand der zweiten Brennweite ($f_2$) angeordnet ist und mindestens einen Lichtintensitätssensor aufweist, für jeden Grauverlaufsfilter der Grauverlaufsfilter-Anordnung jeweils die durch diesen Grauverlaufsfilter transmittierte Lichtintensität misst;

- wobei die Grauverlaufsfilter-Anordnung einen ersten Grauverlaufsfilter mit linearem Transmissionsverlauf in einer ersten Raumrichtung und einen zweiten Grauverlaufsfilter mit linearem Transmissionsverlauf in einer von der ersten Raumrichtung verschiedenen zweiten Raumrichtung aufweist, und/oder wobei die Grauverlaufsfilter-Anordnung wenigstens einen Grauverlaufsfilter mit einem zumindest in einer vorbestimmten Raumrichtung parabelförmigen Transmissionsverlauf aufweist.

Gemäß einem weiteren Aspekt betrifft die Erfindung auch die Verwendung eines Grauverlaufsfilters zur Lichtstrahlanalyse, insbesondere in einem System mit den vorstehend beschriebenen Merkmalen, wobei der Grauverlaufsfilter aus Binärstrukturen gebildet ist, und wobei die Strukturgrößen dieser Binärstrukturen kleiner sind als die Wellenlänge eines zu analysierenden Lichtstrahls.

Weitere Ausgestaltungen der Erfindung sind der Beschreibung sowie den Unteransprüchen zu entnehmen.

Die Erfindung wird nachstehend anhand von in den beigefügten Abbildungen dargestellten Ausführungsbeispielen näher erläutert.

KURZE BESCHREIBUNG DER ZEICHNUNGEN

Es zeigen:

Figur 1      eine schematische Darstellung zur Erläuterung des der vorliegenden Erfindung zugrundeliegenden Prinzips;

Figur 2-3      schematische Darstellungen eines in einer Laserplasmaquelle sowohl zur Bestimmung der Target-Tröpfchen-Position als auch zur Analyse der entsprechend nachzuführenden Laserstrahlen möglichen prinzipiellen Aufbaus;

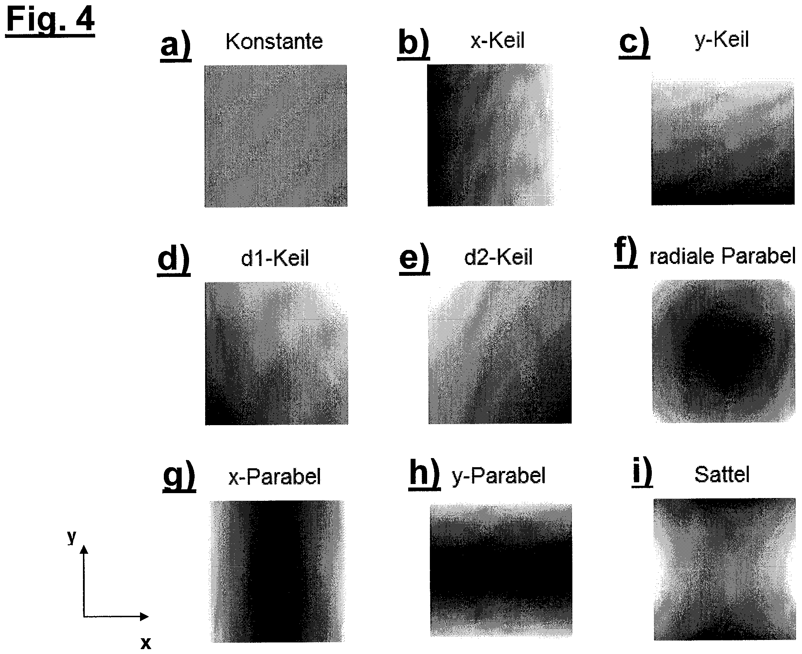

Figur 4      schematische Darstellungen zur Erläuterung unterschiedlicher im Rahmen der vorliegenden Erfindung einsetzbarer Grauverlaufsfilter;

Figur 5      eine schematische Darstellung zur Erläuterung eines möglichen Aufbaus eines erfindungsgemäßen Systems mit einer Grauverlaufsfilter-Anordnung in einer konkreten Ausführungsform;

Figur 6-10      schematische Darstellungen zur Erläuterung weiterer Ausführungsformen von im Rahmen der vorliegenden Erfindung einsetzbaren Grauverlaufsfiltern;

Figur 11-12      schematische Darstellungen zur Erläuterung konkreter Ausführungsformen eines im Rahmen der vorliegenden Erfindung einsetzbaren Grauverlaufsfilters mit Sublambda-Binärstrukturen;

Figur 13      eine schematische Darstellung zur Erläuterung eines herkömmlichen Ansatzes zur Strahlanalyse; und

Figur 14      eine schematische Darstellung des prinzipiellen Aufbaus einer EUV-Lichtquelle gemäß dem Stand der Technik.

DETAILLIERTE BESCHREIBUNG BEVORZUGTER AUSFÜHRUNGSFORMEN

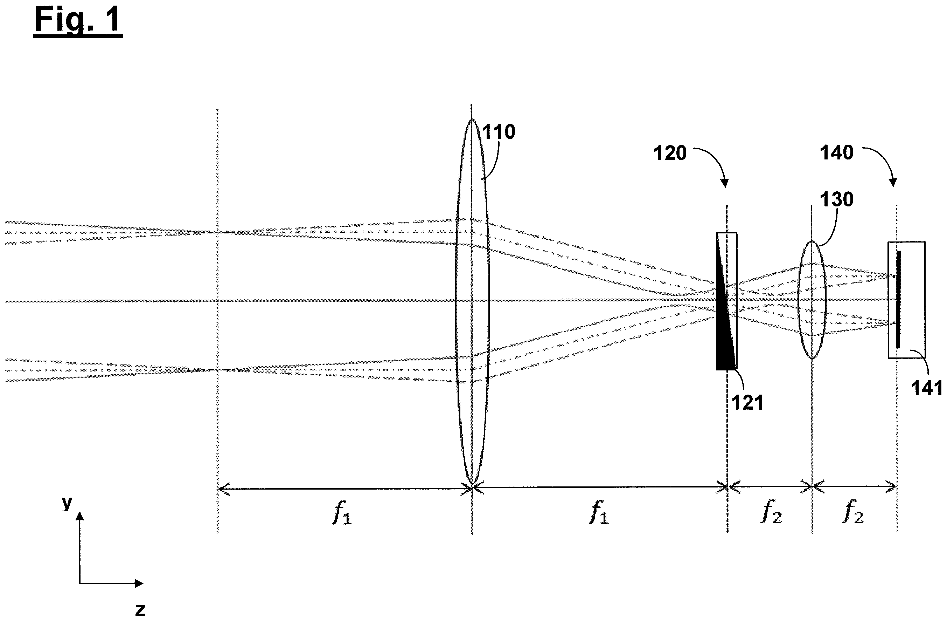

Fig. 1 zeigt eine schematische Darstellung zur Erläuterung des der vorliegenden Erfindung zugrundeliegenden Prinzips und des grundsätzlichen Aufbaus eines erfindungsgemäßen Systems zur Strahlanalyse.

Gemäß Fig. 1 trifft ein kollimiertes Strahlenbündel zunächst entlang der z-Richtung im eingezeichneten Koordinatensystem auf eine erste Fourier-Optik 110 und von dieser fokussiert auf eine Grauverlaufsfilter-Anordnung 120, welche im optischen Strahlengang in einer Fernfeldebene der Strahlführungsoptik (mitunter auch als "Raumfilterebene" bezeichnet) angeordnet ist und in dem dargestellten Ausführungsbeispiel einen einzelnen Grauverlaufsfilter 121 mit einem in y-Richtung linearen (und lediglich schematisch durch einen Keil angedeuteten) Transmissionsverlauf aufweist. Die durch die Grauverlaufsfilter-Anordnung 120 bzw. den Grauverlaufsfilter 121 transmittierte Strahlung gelangt durch eine zweite Fourier-Optik 130 auf eine in einer Nahfeldebene der Strahlführungsoptik angeordnete Lichtintensitätssensor-Anordnung 140, welche im Ausführungsbeispiel einen einzelnen Lichtintensitätssensor 141 aufweist, der einen über die gesamte Sensorfläche integrierten Intensitätswert misst.

Die Erfindung ist hinsichtlich der Fourier-Optiken 110, 130 nicht auf eine konkrete Ausgestaltung beschränkt, wobei insbesondere refraktive, diffraktive, diffraktivmultifokale oder reflektive Ausführungen möglich sind. Gegebenenfalls kann die zweite Fourier-Optik 130 bei ausreichender Uniformität des Lichtintensitätssensors 141 auch entfallen.

Die Erfindung ist ferner hinsichtlich der Ausgestaltung der Lichtintensitätssensor-Anordnung 140 bzw. des Lichtintensitätssensors 141 nicht auf eine bestimmte Ausführung beschränkt, wobei der Lichtintensitätssensor 141 z.B. photovoltaisch, photokonduktiv, pyro-elektromagnetisch oder auch thermisch bzw. bolometrisch ausgestaltet sein kann.

Der bzw. die Grauverlaufsfilter 121 der Grauverlaufsfilter-Anordnung 120 kann bzw. können hinsichtlich des Abschwächungsprinzips als Flächenabsorber oder Volumenabsorber (z.B. Keil), ggf. auch rückreflektierend, ausgestaltet sein.

Die Anordnung des Grauverlaufsfilters 141 (gemäß Fig. 1 in der "Eingriffsebene" eines Kepler-Teleskops) hat in vorteilhafter Weise zur Folge, dass für die Platzierung des Lichtintensitätssensors 141 eine Nahfeldebene zugänglich wird, welche sich u.a. dadurch auszeichnet, dass Form und Größe das dort vorliegenden "Intensitätsgebildes" bei korrekter afokaler Verkopplung im optischen Strahlengang unabhängig von Strahlrichtung und Strahldivergenz sind und zudem die Energie der elektromagnetischen Strahlung unter Vermeidung lokaler Sättigungseffekte hinreichend verdünnt vorliegt. Infolgedessen werden sämtliche Hauptstörquellen entweder - wie im Falle der Strahlrichtung und der Divergenz - eliminiert oder - wie im Falle der Strahldezentrierung und der Variation der Strahlgröße - zumindest hinreichend unterdrückt, so dass störende Artefakte des Lichtintensitätssensors (insbesondere dessen räumliche Inhomogenität und Sättigung) nicht oder nur in wesentlich reduziertem Maße zur Geltung kommen.

Durch die integrierende Wirkung der Lichtintensitätssensor-Anordnung 140 bzw. des Lichtintensitätssensors 141 ergibt sich das von der Lichtintensitätssensor-Anordnung 140 gelieferte Sensorsignal $S$ zu

$$S = \int\limits_{-\infty}^{+\infty} dx \, dy \, I_{FF}(x,y) \, T(x,y) \qquad (1)$$

durch mit der Transmissionsfunktion $T(x,y)$ gewichtete Integration über die im Fernfeld (Fourier-Ebene der Eingangslinse) vorliegende Intensitätsverteilung $I_{FF}(x,y)$. Bei der Wahl der Integrationsgrenzen wird vorausgesetzt, dass die Intensität der Strahlung bzw. des "Lichtgebildes" hinreichend schnell räumlich abfällt. Durch geeignete Wahl des Transmissionsverlaufs $T(x,y)$ können beispielsweise die Momente

$$m_{k,l} = \int\limits_{-\infty}^{+\infty} dx \, dy \, I_{FF}(x,y) \, x^k y^l \qquad (2)$$

der Lichtverteilung direkt messtechnisch zugänglich gemacht werden.

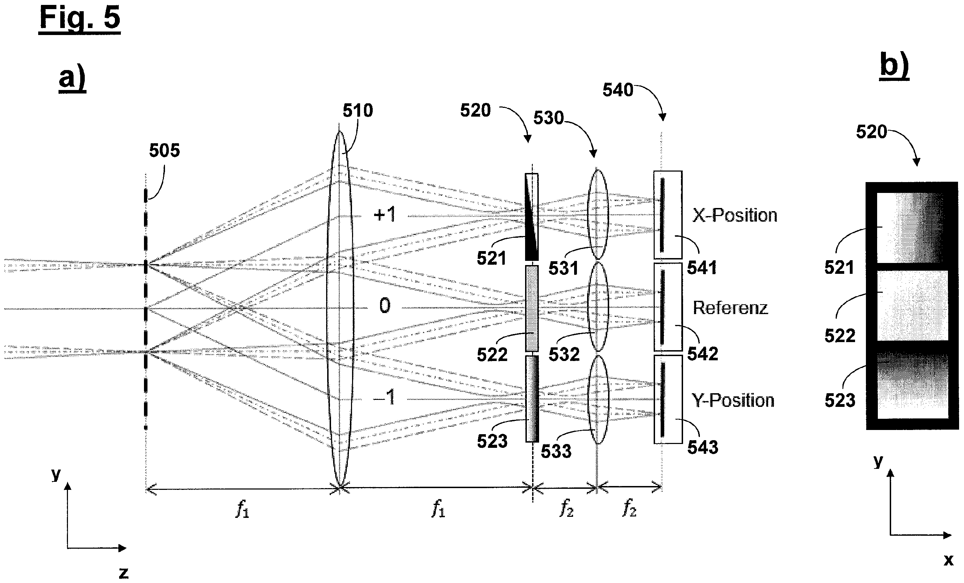

Vorstehend wurde das erfindungsgemäße Prinzip zunächst der Einfachheit halber für einen Aufbau mit lediglich einem Paar aus einem Grauverlaufsfilter und einem Lichtintensitätssensor beschrieben. Zur Bestimmung der (kompletten, d.h. in allen drei Raumrichtungen definierten) Strahlposition des zu analysierenden Lichtstrahls kann, wie im Weiteren unter Bezugnahme auf Fig. 5 beschrieben, eine Grauverlaufsfilter-Anordnung 520 aus drei Grauverlaufsfiltern 521-523 in Kombination mit einer Lichtintensitätssensor-Anordnung 540 aus drei Lichtintensitätssensoren 541-543 eingesetzt werden, wobei ein erster der Grauverlaufsfilter 521 einen bezogen auf das eingezeichnete Koordinatensystem in y-Richtung linearen Transmissionsverlauf, ein zweiter der Grauverlaufsfilter 523 einen in y-Richtung linearen Transmissionsverlauf und ein dritter der Grauverlaufsfilter 522 zwecks Intensitätsnormierung einen konstanten Transmissionsverlauf aufweist.

Des Weiteren besteht die Möglichkeit, auch z.B. die Spotgröße oder höhere Momente der zu analysierenden Strahlung zu erfassen, wobei z.B. zur Spotgrößenbestimmung wie noch detaillierter erläutert ein Grauverlaufsfilter mit parabelförmigem Transmissionsverlauf eingesetzt werden kann.

Unter erneuter Bezugnahme auf Fig. 5 trifft ein kollimiertes Strahlenbündel zunächst entlang der z-Richtung im eingezeichneten Koordinatensystem auf eine diffraktive Struktur bzw. ein optisches Gitter 505, durch welches das Strahlenbündel in Teilstrahlen repliziert wird, welche lediglich räumlich voneinander getrennt sind und im Übrigen zueinander identische optische Strahleigenschaften aufweisen und. Gemäß Fig. 5 erfolgt diese Replikation in den drei Beugungsordnungen "+1", "0" und "-1". Die Auslegung wird dabei vorzugsweise gewählt, dass die Teilstrahlen mit maximalem Durchmesser $d_{max}$ beaufschlagt und mit der maximalen Lagevariation $r_{max}$ (jeweils bezogen auf die Fernfeldebene) derart getrennt werden, dass eine störende Wechselwirkung infolge von Interferenzeffekten vermieden wird.

Entsprechend der durch das optische Gitter 505 erzielten Separation der Teilstrahlen weist die Grauverlaufsfilter-Anordnung 520 eine (z.B. monolithische) Anordnung von Grauverlaufsfiltern 521-523 (Graufilter-Array) auf, die wie in Fig. 5b in Draufsicht angedeutet ausgelegt sein können. Des Weiteren sind gemäß Fig. 5a die ausgangsseitige Fourier-Optik 130 sowie der Lichtintensitätssensor 140 von Fig. 1 durch eine (z.B. ebenfalls monolithische) Anordnung von mehreren Fourier-Optiken (in Form eines Linsenarrays) 531-533 bzw. eine Anordnung von mehreren Lichtintensitätssensoren 541-543 ersetzt.

Im Folgenden werden die Signalerzeugung und die Bestimmung der gesuchten Positionsinformation für die in Fig. 5 dargestellte Konfiguration zur Positionsmessung mit drei Grauverlaufsfiltern 521-523 ("Graufilterkanälen") beschrieben.

Der Transmissionsverlauf eines Grauverlaufsfilters mit linearem Transmissionsverlauf wird dabei durch

$$T(s) = \frac{1}{2} + \frac{s - s_0}{W} \qquad (3)$$

parametrisiert. Darin bezeichnet $s$ die Lagekoordinate in Verlaufsrichtung, $s_0$ die Lage des Transmissionswertes ½ und $W$ die Breite der Zone des kompletten Anstiegs der Transmission vom Wert Null bis auf den Wert Eins.

Damit ergeben sich die Signale $S_1$ bis $S_3$ der drei Messkanäle (entsprechend den drei Grauverlaufsfiltern 521-523 bzw. Lichtintensitätssensoren 541-543 der Konfiguration von Fig. 5) zu

$$S_1 = \eta_1 \int\limits_{-\infty}^{+\infty} dx\, dy\, I_{FF}(x,y)\left[\frac{1}{2} + \frac{x - x_0}{W_x}\right] \ ,$$

$$S_2 = \eta_2 \int\limits_{-\infty}^{+\infty} dx\, dy\, I_{FF}(x,y)\left[\frac{1}{2} + \frac{y - y_0}{W_y}\right] \ , \qquad (4)$$

$$S_3 = \eta_3 \frac{1}{2} \int\limits_{-\infty}^{+\infty} dx\, dy\, I_{FF}(x,y) \ .$$

Die Parameter $W_x$ und $W_y$ sowie $x_0$ und $y_0$ charakterisieren die beiden Grauverlaufsfilter 521, 523 mit linearem Transmissionsverlauf. Die Parameter $\eta_1$ bis $\eta_3$ stehen für die Nachweisempfindlichkeiten der Kanäle, die aus unterschiedlichen Gründen (z.B. Bauteilschwankungen etc.) variieren kann.

Durch Normierung auf ein Referenzsignal, welches hier durch einen uniformen Grauverlaufsfilter 522 mit konstantem Transmissionsverlauf (z.B. mit der Transmission ½) erhalten wird, werden Energieschwankungen (Laserpulsschwankungen) eliminiert. Die beiden normierten Signale enthalten dann die Schwerpunktinformation für den zu analysierenden Lichtstrahl und lauten:

$$\frac{S_1}{S_3} = \underbrace{\frac{\eta_1}{\eta_3}\left(1 - 2\frac{x_0}{W_x}\right)}_{C_x} + \underbrace{\frac{\eta_1}{\eta_3}\frac{1}{W_x}}_{G_x}\bar{x} = C_x + G_x\bar{x} \ ,$$

$$\frac{S_2}{S_3} = \underbrace{\frac{\eta_2}{\eta_3}\left(1 - 2\frac{y_0}{W_y}\right)}_{C_y} + \underbrace{\frac{\eta_2}{\eta_3}\frac{1}{W_y}}_{G_x}\bar{y} = C_y + G_y\bar{y} \ . \qquad (5)$$

Die Auslegungsparameter können darin zu vier Effektiv-Parametern, zwei Offset-Werten $C_x$ und $C_y$ sowie zwei Gain-Werten $G_x$ und $G_y$, zusammengefasst werden, welche beispielsweise durch Kalibration bestimmbar sind und deshalb im Weiteren als Kalibrierparameter bezeichnet werden.

Durch Umstellung der Gleichung in Kenntnis der vier Kalibrierparameter ergeben sich schließlich die Schwerpunktpositionen aus den Messsignalen zu

$$\bar{x} = \frac{1}{G_x}\left(\frac{S_1}{S_3} - C_x\right) \ ,$$

$$\bar{y} = \frac{1}{G_y}\left(\frac{S_2}{S_3} - C_y\right) \ . \qquad (6)$$

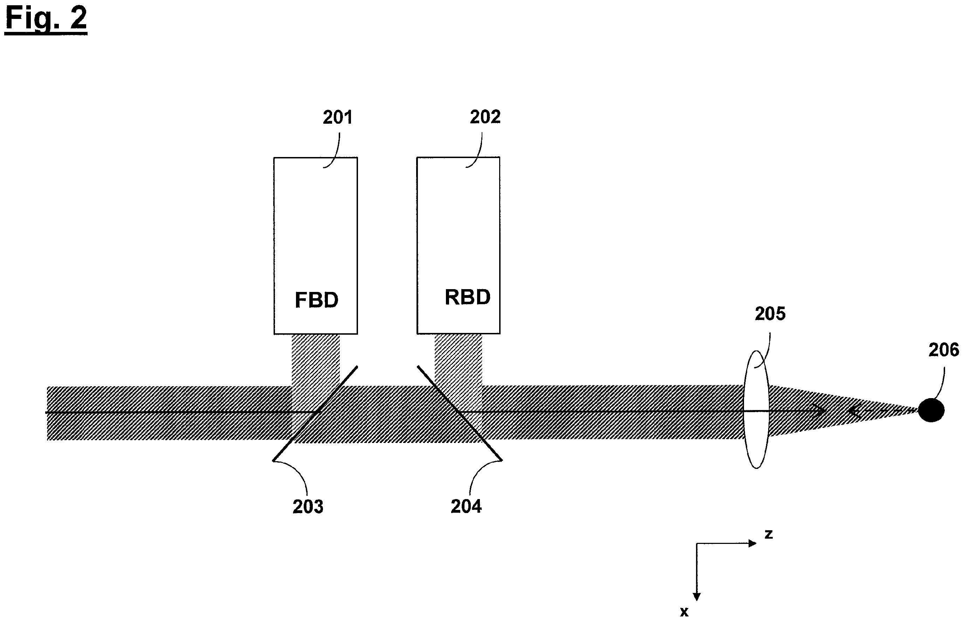

Die vorstehend unter Bezugnahme auf Fig. 1 bzw. Fig. 5 beschriebenen Systeme zur Lichtstrahlanalyse können insbesondere in einer Laserplasmaquelle (wie z.B. derjenigen in Fig. 14) sowohl zur Bestimmung der Target-Tröpfchen-Position als auch zur Analyse der entsprechend nachzuführenden Laserstrahlen möglichen prinzipiellen Aufbaus eingesetzt werden, wozu Fig. 2 eine schematische Darstellung eines möglichen, prinzipiellen Gesamtaufbaus zeigt. Hierbei werden sowohl Laserstrahlen in "Vorwärtsrichtung" (vor dem Auftreffen auf das jeweilige Target-Tröpfchen) als auch Laserstrahlen in "Rückwärtsrichtung" (d.h. die von dem jeweiligen Target-Tröpfchen zurückreflektierte Infrarotstrahlung) ausgewertet.

Gemäß Fig. 2 wird ein Teil des einfallenden Laserstrahls mit Gauß'schem Profil an einem ersten teildurchlässigen Spiegel 203 ausgekoppelt und mit einer ersten Analyseeinheit 201, welche insbesondere ein System analog zu Fig. 1 oder Fig. 5 aufweisen kann, analysiert. Der den teildurchlässigen Spiegel 203 sowie einen weiteren teildurchlässigen Spiegel 204 durchlaufende Teil des einfallenden Laserstrahls gelangt über eine Fokussieroptik 205 zu einem metallischen Target-(z.B. Zinn-) Tröpfchen 206, wo ein Teil des Laserstrahls zurückreflektiert wird und über die Fokussieroptik 205 kollimiert zum teildurchlässigen Spiegel 204 zurückgelangt. An dem teildurchlässigen Spiegel 204 wird wiederum ein Teil des Laserstrahls zu einer zweiten Analyseeinheit 202 hin ausgekoppelt, welche ebenfalls insbesondere ein System analog zu Fig. 1 oder Fig. 5 aufweisen kann. Des Weiteren können (in Fig. 2 nicht eingezeichnete) Strahlfallen zum Auffangen des jeweils nicht genutzten Anteils der auf den teildurchlässigen Spiegel 203 bzw. 204 auftreffenden Strahlung vorgesehen sein.

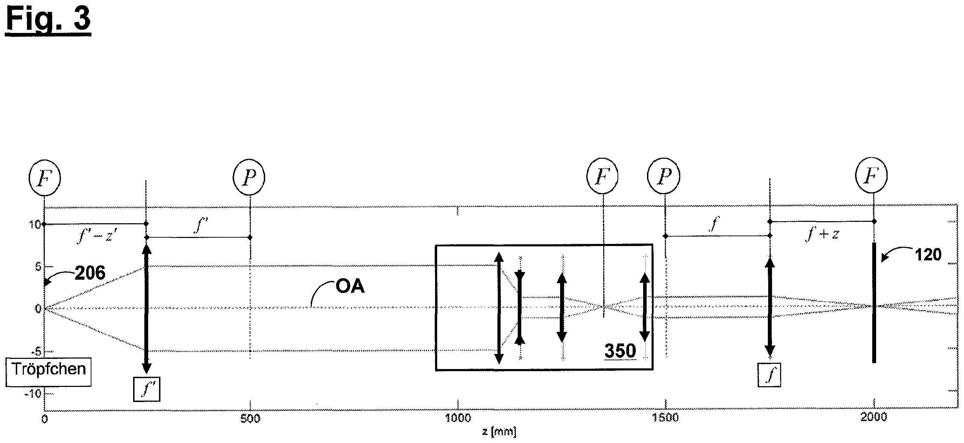

Ein schematischer Strahlengang zur Analyse des Laserstrahls in "Rückwärtsrichtung" ist in Fig. 3 dargestellt, wobei jeweils Feldebenen mit "F" und Pupillenebenen mit "P" bezeichnet sind. "206" bezeichnet in Fig. 3 das metallische Target-Tröpfchen, "350" ist eine afokale Teleskopgruppe, und "120" repräsentiert die anhand von Fig. 1 beschriebene Grauverlaufsfilter-Anordnung (mit nachfolgender, jedoch in Fig. 3 nicht dargestellter zweiter Fourier-Optik und Lichtintensitätssensor-Anordnung). Eine Verschiebung der Position des Target-Tröpfchens 206 hat eine Änderung des mit der Lichtintensitätssensor-Anordnung erhaltenen Messergebnisses zur Folge.

Die Analyse der Laserstrahlen sowohl in "Vorwärtsrichtung" (Laserstrahl vor dem Auftreffen auf das jeweilige Target-Tröpfchen 206, "Vorwärtsstrahl") als auch in "Rückwärtsrichtung" (Laserstrahl nach Reflexion dem jeweiligen Target-Tröpfchen 206, "Rückwärtsstrahl") erlaubt so eine Aussage über die relative Einstellung von Laserstrahl und Target-Tröpfchen 206 zueinander, wobei - unter erneuter Bezugnahme auf Fig. 1 - aus dem mit der ersten Analyseeinheit 201 erhaltenen Ergebnis auf die Einstellung bzw. Fokuslage des Laserstrahls und aus dem mit der zweiten Analyseeinheit 202 erhaltenen Ergebnis auf die Tröpfchenposition geschlossen werden kann.

Im Weiteren werden zum Hintergrund einige Grundlagen der afokalen Abbildung erläutert. Nach dem in der paraxialen Optik gebräuchlichen Transfermatrixformalismus (ABCD-Matrix) ergibt sich die Abbildungsmatrix des verketteten Strahlengangs gemäß Fig. 3 durch Multiplikation der Teilabschnittmatrizen entsprechend

$$\underline{\underline{M}} = \underbrace{\begin{pmatrix} 1 & f+z \\ 0 & 1 \end{pmatrix} \begin{pmatrix} 1 & 0 \\ \dfrac{-1}{f} & 1 \end{pmatrix} \begin{pmatrix} 1 & f \\ 0 & 1 \end{pmatrix}}_{\substack{\text{bildseitige Linse} \\ \text{(von Fourierebene zu Sensorebene)}}} \underbrace{\begin{pmatrix} mag & 0 \\ 0 & \dfrac{1}{mag} \end{pmatrix}}_{\text{Teleskop}} \underbrace{\begin{pmatrix} 1 & f' \\ 0 & 1 \end{pmatrix} \begin{pmatrix} 1 & 0 \\ \dfrac{-1}{f'} & 1 \end{pmatrix} \begin{pmatrix} 1 & f'-z' \\ 0 & 1 \end{pmatrix}}_{\substack{\text{objektseitige Linse} \\ \text{(von Objektebene zu Fourierebene)}}}$$

$$(7)$$

Die objekt- und bildseitigen Brennweiten $f'$ und $f$ sowie der Teleskopabbildungsmaßstab $mag$ werden anhand von Fig. 3 deutlich (Objektraum gestrichen, Bildraum ungestrichen), und die Positionen $z'$ und $z$ beziehen sich auf die Brennebene der jeweiligen Fourier-Optik. Die Transfermatrix vermittelt die Transformation der durch die Strahlposition $x$ und den Strahlwinkel $u \approx \tan(u)$ definierten Strahlvektoren zwischen Objektraum $ray' = (x',u')$ und Bildraum $ray = (x,u)$ gemäß

$$\begin{pmatrix} x \\ u \end{pmatrix} = \underline{\underline{M}} \begin{pmatrix} x' \\ u' \end{pmatrix} \quad \text{mit} \quad \underline{\underline{M}} = \begin{pmatrix} -Mag & Mag\ z' - \dfrac{1}{Mag} z \\ 0 & -\dfrac{1}{Mag} \end{pmatrix} \qquad (8)$$

wobei $$Mag = \frac{f}{f'\ mag}$$ für den Abbildungsmaßstab der Fernfeldabbildung steht.

Eine scharfe Abbildung liegt vor, wenn alle von einem Objektpunkt ausgehenden Strahlen unabhängig vom Strahlwinkel in einem Bildpunkt zusammengeführt werden. Entsprechend lautet die Fokusbedingung

$$M_{12} = \frac{\partial x}{\partial u'} = -\frac{1}{Mag} z + Mag\ z' \overset{!}{=} 0 \qquad (9)$$

Daraus folgt unmittelbar die Abbildungsbedingung $z = Mag^2 z'$.

Es wird davon ausgegangen, dass ein von einem Objektpunkt am Ort $(x', y', z')$ ausgehendes kegelförmiges Strahlenbündel von seinen Randstrahlen $\underline{eray'} = (x', \bar{u}' + \theta\sin(\varphi), y', \bar{v}' + \theta\cos(\varphi))$ objektseitig begrenzt wird, wobei $\bar{u}'$

und $\bar{v}$ die Schwerstrahlwinkel und $\theta$ den Öffnungs- bzw. Divergenzwinkel bezeichnen. Die Propagation des Strahlenbündels durch die Abbildungsoptik mit dem Bildsensor an der Position z = 0 (in der Brennebene der bildseitigen Fourier-Optik) lautet gemäß dem (um die Richtung senkrecht zur Ausbreitungsrichtung erweiterten) Transfermatrixformalismus

$$\underline{eray} = \begin{pmatrix} \underline{\underline{M}} & 0 \\ 0 & \underline{\underline{M}} \end{pmatrix} \underline{eray'} \quad \text{mit} \quad \underline{\underline{M}} = \begin{pmatrix} -Mag & Mag\ z' \\ 0 & -\dfrac{1}{Mag} \end{pmatrix} \tag{10}$$

Daraus ergeben sich die geometrisch-optischen Abbildungsgleichungen schließlich zu

$$\bar{x} = -Mag\left(x' - z'\bar{u}'\right) \quad , \quad \bar{y} = -Mag\left(y' - z'\bar{v}'\right) \tag{11a}$$

$$\bar{u} = -\frac{1}{Mag}\bar{u}' \quad , \quad \bar{v} = -\frac{1}{Mag}\bar{v}' \tag{11b}$$

$$\theta = -\frac{1}{Mag}\theta' \tag{11c}$$

$$z = Mag^2 z' \tag{11d}$$

Der Querbalken über dem Symbol zeigt dabei den Schwerstrahl an.
Grundsätzlich sind für das Strahlgrößenmaß wie auch für das Divergenzmaß fallabhängig verschiedene Konventionen möglich und üblich. Auf dem Gebiet der Lasertechnik dienen beispielsweise häufig die Momente

$$w_x^2(z) = \frac{\displaystyle\int_{-\infty}^{+\infty} dx\,dy\,I(x,y;z)\left(x - \bar{x}(z)\right)^2}{\displaystyle\int_{-\infty}^{+\infty} dx\,dy\,I(x,y;z)} \quad , \quad w_y^2(z) = \frac{\displaystyle\int_{-\infty}^{+\infty} dx\,dy\,I(x,y;z)\left(y - \bar{y}(z)\right)^2}{\displaystyle\int_{-\infty}^{+\infty} dx\,dy\,I(x,y;z)}$$

$$\tag{12}$$

mit

$$\bar{x}(z) = \frac{\displaystyle\int_{-\infty}^{+\infty} dx\,dy\,I(x,y;z)\,x}{\displaystyle\int_{-\infty}^{+\infty} dx\,dy\,I(x,y;z)} \quad , \quad \bar{y}(z) = \frac{\displaystyle\int_{-\infty}^{+\infty} dx\,dy\,I(x,y;z)\,y}{\displaystyle\int_{-\infty}^{+\infty} dx\,dy\,I(x,y;z)} \tag{13}$$

als Grundlage einer Strahlgrößendefinition entsprechend

$$w(z) = \sqrt{w_x^2(z) + w_y^2(z)} \tag{14}$$

oder

$$w(z) = \sqrt[4]{w_x^2(z)\,w_y^2(z)} \qquad\qquad (15)$$

Hierin bezeichnet $I(x,y;z)$ die Lichtintensität für die gewählte Schnittebene.

Mit der Momentendefinition entsprechend Gleichung (2) ergeben sich der Schwerpunkt $(\bar{x}, \bar{y})$ und die Strahl-größenparameter $w_x^2, w_y^2, w^2 = w_x^2 + w_y^2$ wie folgt:

$$\bar{x} = \frac{m_{1,0}}{m_{0,0}} \;,$$

$$\bar{y} = \frac{m_{0,1}}{m_{0,0}} \;,$$

$$w_x^2 = \frac{m_{2,0}}{m_{0,0}} - \bar{x}^2 = \frac{m_{2,0}}{m_{0,0}} - \left(\frac{m_{1,0}}{m_{0,0}}\right)^2 \;, \qquad\qquad (16)$$

$$w_y^2 = \frac{m_{0,2}}{m_{0,0}} - \bar{y}^2 = \frac{m_{0,2}}{m_{0,0}} - \left(\frac{m_{0,1}}{m_{0,0}}\right)^2 \;,$$

$$w^2 = w_x^2 + w_y^2 = \frac{m_{2,0}}{m_{0,0}} + \frac{m_{0,2}}{m_{0,0}} - \left(\frac{m_{1,0}}{m_{0,0}}\right)^2 - \left(\frac{m_{0,1}}{m_{0,0}}\right)^2 \;.$$

Bei der Analyse des Vorwärtsstrahls sowie des Rückwärtsstrahls in dem prinzipiellen Aufbau von Fig. 2 ist zu beachten, dass nur der Vorwärtsstrahl idealisiert als "Gaußstrahl" anzusehen ist, für welchen im Bereich des bildseitigen Fokus für die Strahlgröße w als Funktion der Ausbreitungskoordinate z in guter Näherung

$$w(z) = \sqrt{w_0^2 + \theta^2 \left(z - z_0\right)^2} \qquad\qquad (17)$$

gilt, wobei $w_0$ die Taillengröße, $\theta$ die Divergenz und $z_0$ die Taillenlage (Fokuslage) bezeichnen.

Im Weiteren wird noch kurz auf Probleme eingegangen, welche sich etwa im Falle der Analyse des Rückwärtsstrahls in der zweiten Analyseeinheit 120 daraus ergeben, dass der zu untersuchende Strahl kein idealer Gaußstrahl ist, sondern ein vergleichsweise scharf begrenzter Strahl (im Weiteren auch als "Tophat-Strahl" bezeichnet). Im Falle eines solchen scharf begrenzten Strahls ergibt sich im Fokus (Fernfeld) sowie im aberrationsfreien Idealfall die Airy'sche Lichtverteilung

$$I\left(r = \sqrt{x^2 + y^2}, z = z_0\right) = \pi\, P \left(\frac{1}{L_c}\right)^2 \left[\frac{2J_1\left(2\pi \dfrac{r}{L_c}\right)}{2\pi \dfrac{r}{L_c}}\right]^2 \qquad\qquad (18)$$

wobei $L_c = \dfrac{\lambda}{NA}$ die charakteristische Länge, $P$ die gesamte durch das System transmittierte Leistung und $J_1(x)$ die

$$I(r, z = z_0) \propto \frac{1}{r^2}$$

Bessel-Funktion erster Ordnung bezeichnen. Aufgrund des asymptotischen Abfalls ... in dieser Lichtverteilung sind jedoch die Momente entsprechend Gleichung (12) nicht definiert. Das hieraus resultierende Problem einer Auswertung auch des "hart begrenzten" Rückwärtsstrahls kann durch eine geeignete "künstliche" Apodisierung überwunden werden: In einer Ausführungsform kann eine (im vorstehenden Sinne "weiche") Apodisation

$$u(x, y; z_{NF})\theta(x^2 + y^2 \leq R_{NA}) \rightarrow u(x, y; z_{NF})A_{R_{NA}}(x, y) \quad (19)$$

durch Einbringen eines strukturierten Graufilters mit entsprechendem Profil in das Nahfeld bzw. in eine Pupillenebene realisiert werden. Hierbei bezeichnen $u(x,y;z)$ die Strahlamplitude (welche über $I(x,y;z) = |u(x,y;z)|^2$ die Intensität bestimmt) und $R_{NA}$ den (die Öffnung bzw. numerische Apertur $NA$ definierenden) Aperturradius. Hierzu geeignet ist beispielsweise die erst ab den zweiten Ableitungen unstetige Funktion

$$A_R(x, y) = \frac{1}{2}\left(1 + \cos\left(\pi \frac{\sqrt{x^2 + y^2}}{R}\right)\right) \quad (20)$$

mit dem Beschneidungsradius $R$ im Bereich um $R_{NA}$.

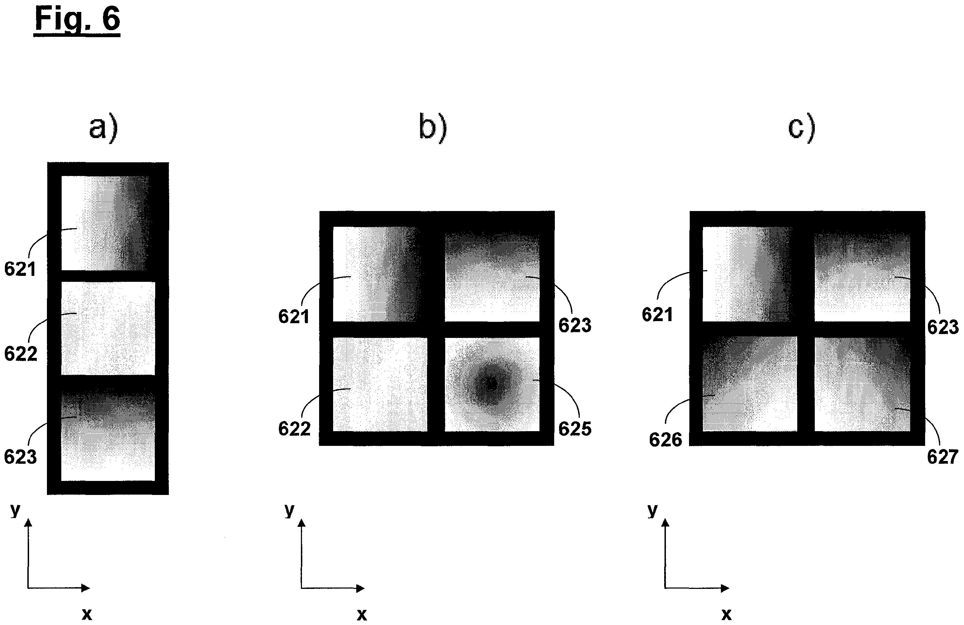

Im Weiteren werden unterschiedliche mögliche Ausführungsformen bzw. Transmissionsverläufe von gemäß der Erfindung einsetzbaren Grauverlaufsfiltern unter Bezugnahme auf Fig. 6ff detaillierter beschrieben.

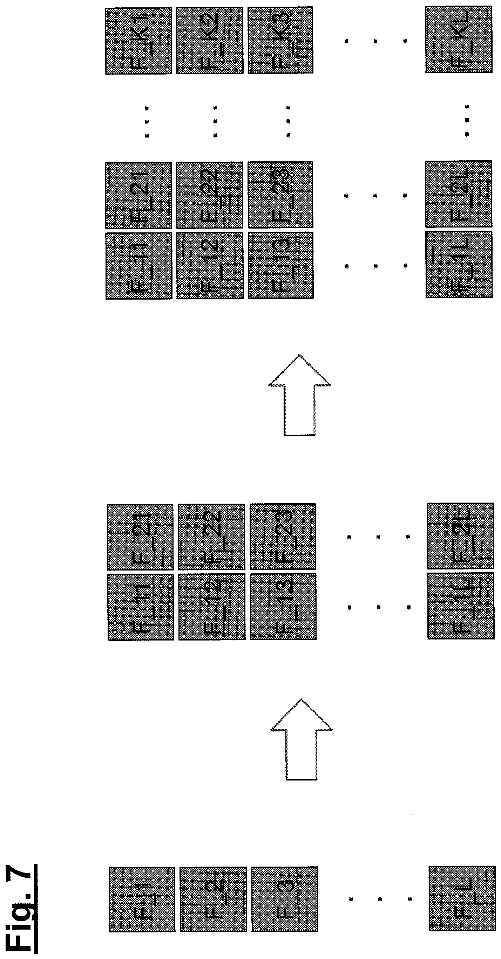

Fig. 6a zeigt eine lineare Anordnung von drei Grauverlaufsfiltern 621-623, wie sie im Aufbau von Fig. 5 verwendet wird. Fig. 6b zeigt eine (z.B. im Hinblick auf bestehende Bauraumbeschränkungen) gefaltete 2-D-Anordnung aus vier Grauverlaufsfiltern (bzw. "Kanälen"), welche über die Grauverlaufsfilter 621-623 von Fig. 6a hinaus einen zusätzlichen, in seinem Transmissionsverlauf radialparabolischen Grauverlaufsfilter 625 (zum Zwecke einer Spotgrößenmessung oder einer Justage) aufweist. Fig. 6c zeigt eine redundante gefaltete 2-D-Anordnung, welche zusätzlich zu zwei Grauverlaufsfiltern 621, 623 mit in x- bzw.-y-Richtung linearem Transmissionsverlauf zwei Grauverlaufsfilter 626, 627 mit in hierzu diagonaler (45°-)Richtung linearem Transmissionsverlauf aufweist. In Fig. 6c wird auf den Grauverlaufsfilter 622 mit konstantem Transmissionsverlauf verzichtet, wobei vorausgesetzt wird, dass das Signal zur Intensitätsnormierung anderweitig verfügbar ist. Fig. 7 illustriert die beliebige Anordnung von Grauverlaufsfiltern ausgehend von einer linearen Anordnung zu einer 2D-Matrixanordnung.

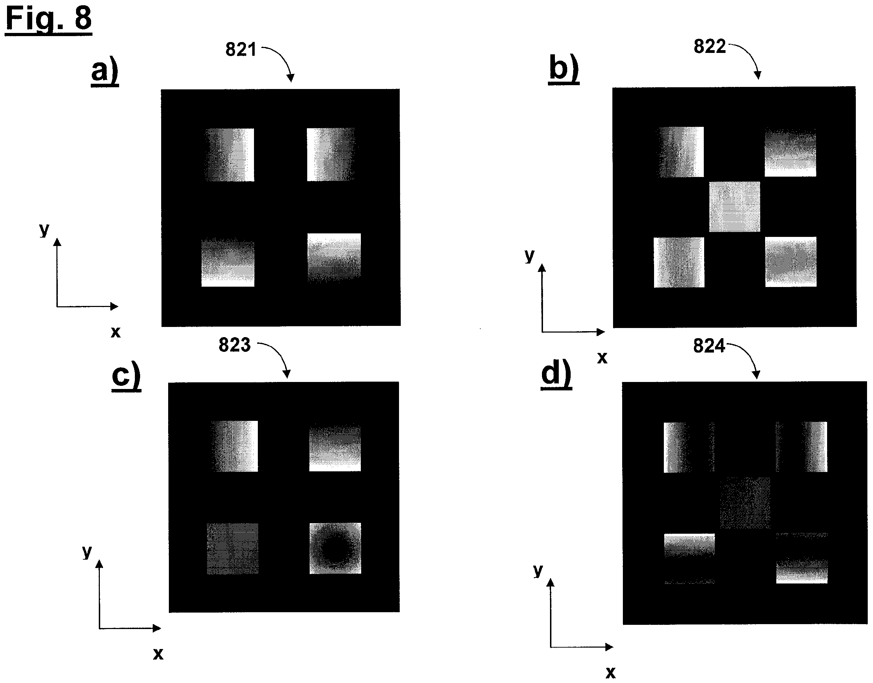

Durch Verwendung von paarweise entgegengesetzten Grauverlaufsfiltern (bzw. "Keilverlaufsfiltern") kann ebenfalls eine Energienormierung abgeleitet werden. Dies wird im Folgenden kurz für die in Fig. 8a exemplarisch gezeigte Grauverlaufsfilter-Anordnung 821 dargelegt, welche je zwei in positiver bzw. negativer x-bzw. y-Richtung lineare Transmissionsverläufe zur Messung der Fokuslagekoordinaten eines zu charakterisierenden Laserstrahls aufweist.

Für das Ausführungsbeispiel von Fig. 8a ergeben sich die Sensorsignale zu:

$$\begin{aligned} S_1 &= G\left[\frac{I}{2} + I\frac{\bar{x} - x_1}{W}\right] \ , \\ S_2 &= G\left[\frac{I}{2} - I\frac{\bar{x} - x_1}{W}\right] \ , \\ S_3 &= G\left[\frac{I}{2} + I\frac{\bar{y} - y_3}{W}\right] \ , \\ S_4 &= G\left[\frac{I}{2} - I\frac{\bar{y} - y_3}{W}\right] \ . \end{aligned} \quad (21)$$

Zur einfacheren Erläuterung des Prinzips wird für alle Grauverlaufsfilter ein einheitlicher Gain-Wert G sowie eine einheitliche ("Keil-")Breite W des linearen Transmissionsverlaufs vorausgesetzt. Die "Keilverschiebungen" $x_1$ und $y_3$ sind ebenfalls paarweise gleich gewählt. $I$ steht für die über das Lichtgebilde integrierte Gesamtintensität

$$I = m_{0,0} = \int\limits_{-\infty}^{+\infty} dx\, dy\, I_{FF}(x,y) \quad . \tag{22}$$

Durch Addition und Differenzbildung ergibt sich

$$S_1 + S_2 = G\, I \quad ,$$

$$S_1 - S_2 = 2\, G\, I\, \frac{\overline{x} - x_1}{W} \quad ,$$

$$S_3 + S_4 = G\, I \quad , \tag{23}$$

$$S_3 - S_4 = 2\, G\, I\, \frac{\overline{y} - y_3}{W} \quad .$$

Die beiden Summensignale "$S_1+S_2$" und "$S_3+S_4$" ergeben gemäß dem Gleichungssystem (23) jeweils die Gesamtintensität. Diese kann zur Normierung der beiden Differenzsignale herangezogen werden, um schließlich die gewünschten Schwerpunktlagen zu extrahieren.

Grauverlaufsfilter zweiter Ordnung, welche einen parabolischen Transmissionsverlauf besitzen, bieten die Möglichkeit, die zweiten Momente der Lichtverteilung und damit die Größe des zu analysierenden Lichtstrahls (bzw. des "Lichtgebildes") zu messen. Der Verlauf eines Grauverlaufsfilters mit parabolischem Transmissionsverlauf wird durch die Transmissionsfunktion

$$T(s) = \left( \frac{s - s_0}{W} \right)^2 \tag{24}$$

parametrisiert. Darin bezeichnet $s$ die Lagekoordinate in Verlaufsrichtung, $s_0$ die Lage des Scheitels und W die Breite des Bereichs, über den der komplette Anstieg des Transmissionskoeffizienten vom Wert Null auf den Wert Eins erfolgt.

Fig. 8b zeigt exemplarisch und schematisch eine Ausgestaltung einer Grauverlaufsfilter-Anordnung 822 mit fünf Grauverlaufsfiltern (bzw. "Messkanälen"), welche einen Grauverlaufsfilter mit linearem Transmissionsverlauf in x-Richtung, einen Grauverlaufsfilter mit linearem Transmissionsverlauf in y-Richtung, einen uniformen Grauverlaufsfilter mit konstantem Transmissionsverlauf als Referenz, einen Grauverlaufsfilter mit in x-Richtung parabelförmigem Transmissionsverlauf sowie einen Grauverlaufsfilter mit in y-Richtung parabelförmigem Transmissionsverlauf aufweist. Für diese Auslegung ergeben sich die Signale $S_1$ bis $S_5$ zu:

$$S_1 = \eta_1 \int\limits_{-\infty}^{+\infty} dx\, dy\, I_{FF}(x,y) \left[ \frac{1}{2} + \frac{x - x_1}{W_1} \right] \quad ,$$

$$S_2 = \eta_2 \int\limits_{-\infty}^{+\infty} dx\, dy\, I_{FF}(x,y) \left[ \frac{1}{2} + \frac{y - y_2}{W_2} \right] \quad ,$$

$$S_3 = \eta_3 \frac{1}{2} \int\limits_{-\infty}^{+\infty} dx\, dy\, I_{FF}(x,y) \quad , \tag{25}$$

$$S_4 = \eta_4 \int\limits_{-\infty}^{+\infty} dx\, dy\, I_{FF}(x,y) \left( \frac{x - x_4}{W_4} \right)^2 \quad ,$$

$$S_5 = \eta_5 \int\limits_{-\infty}^{+\infty} dx\, dy\, I_{FF}(x,y) \left( \frac{y - y_5}{W_5} \right)^2 \quad .$$

Die Parameter $W_1$, $W_2$, $W_4$ und $W_5$ sowie $x_1$, $y_2$, $x_4$ und $y_5$ charakterisieren die vier Grauverlaufsfilter. Die Parameter $\eta_1$ bis $\eta_5$ stehen für die Detektionsempfindlichkeiten der Kanäle, deren Variation verschiedene Ursachen (z.B. Bauteilschwankungen, usw.) haben kann. Durch Normierung auf das Referenzsignal, das hier durch den uniformen Grauverlaufsfilter mit der Transmission ½ erhalten wird, werden Energieschwankungen (Laserpulsschwankungen) eliminiert. Die vier normierten Signale enthalten dann die Information über die Lichtverteilung und lauten:

$$\frac{S_1}{S_3} = \underbrace{\frac{\eta_1}{\eta_3}\left(1 - 2\frac{x_1}{W_1}\right)}_{C_1} + \underbrace{\frac{\eta_1}{\eta_3}\frac{1}{W_1}}_{G_1}\bar{x} = C_1 + G_1\bar{x} \quad,$$

$$\frac{S_2}{S_3} = \underbrace{\frac{\eta_2}{\eta_3}\left(1 - 2\frac{y_2}{W_2}\right)}_{C_2} + \underbrace{\frac{\eta_2}{\eta_3}\frac{1}{W_2}}_{G_2}\bar{y} = C_2 + G_2\bar{y} \quad,$$

$$\frac{S_4}{S_3} = \underbrace{\frac{\eta_4}{\eta_3}\frac{2}{W_4^2}}_{G_4}\left(\langle x^2\rangle - 2x_4\bar{x} + x_4^2\right) = G_4\left(\langle x^2\rangle - 2x_4\bar{x} + x_4^2\right) \quad,$$

$$\frac{S_5}{S_3} = \underbrace{\frac{\eta_5}{\eta_3}\frac{2}{W_5^2}}_{G_5}\left(\langle y^2\rangle - 2y_5\bar{y} + y_5^2\right) = G_5\left(\langle y^2\rangle - 2y_5\bar{y} + y_5^2\right) \quad.$$

$$(26)$$

Die Auslegungsparameter werden darin teilweise zu Effektiv-Parametern zusammengefasst. Durch Kalibration oder anderweitig zu bestimmen bleiben dann die beiden Offset-Werte $C_1$ und $C_2$, die vier Gain-Werte $G_1$, $G_2$, $G_4$ und $G_5$ sowie die beiden Scheitellagen $x_4$ und $y_5$. Durch Umstellung der Gleichungen des Gleichungssystems (21) und in Kenntnis der acht Kalibrierparameter ergibt sich schließlich die Strahllagen- und Strahlgrößeninformation aus den Messsignalen entsprechend

$$\bar{x} = \frac{1}{G_1}\left(\frac{S_1}{S_3} - C_1\right) \quad,$$

$$\bar{y} = \frac{1}{G_2}\left(\frac{S_2}{S_3} - C_2\right) \quad,$$

$$w_x^2 = \langle x^2\rangle - \bar{x}^2 = \frac{1}{G_4}\frac{S_4}{S_3} + 2x_4\bar{x} - x_4^2 - \bar{x}^2 \quad,$$

$$(27)$$

$$w_y^2 = \langle y^2\rangle - \bar{y}^2 = \frac{1}{G_5}\frac{S_5}{S_3} + 2y_5\bar{y} - y_5^2 - \bar{y}^2 \quad,$$

$$w^2 = w_x^2 + w_y^2 \quad.$$

Zusammenfassend bieten Grauverlaufsfilter zweiter Ordnung auch den messtechnischen Zugang auf die Strahlgrößenparameter $w_x^2$ und $w_y^2$.

Wenn lediglich die Strahlgröße $w^2 = w_x^2 + w_y^2$ von Interesse ist, dann können ausgehend von der Ausführungsform von Fig. 8b die beiden Grauverlaufsfilter mit parabelförmigem Transmissionsverlauf durch einen einzigen Grauverlaufsfilter mit rotationsparaboloidförmigem Transmissionsverlauf zum Erhalt einer Grauverlaufsfilter-Anordnung 823 gemäß Fig. 8c ersetzt werden. Die Signalgewinnung ist gemäß dem vorstehend beschriebenen Schema entsprechend anzupassen.

Bei Verwendung räumlich verschobener parabelförmiger Transmissionsverläufe ist es ferner möglich, einen Fokuspositions- und Fokusgrößensensor zu realisieren, der ohne Verwendung von linearen Transmissionsverläufen auskommt. Eine beispielhafte Ausgestaltung einer solchen Grauverlaufsfilter-Anordnung 824 ist in Fig. 8d gezeigt. Das Prinzip basiert auf paarweise parabelförmigen Grauverlaufsfiltern, deren Scheitel paarweise entgegengesetzt entlang der Verlaufsachse verschoben sind.

Für diese Auslegung ergeben sich die auf die Referenz normierten Signale zu:

$$\frac{S_1}{S_3} \propto G\left(\left\langle x^2 \right\rangle - 2x_0 \bar{x} + x_0^2\right) \quad,$$

$$\frac{S_2}{S_3} = G\left(\left\langle x^2 \right\rangle + 2x_0 \bar{x} + x_0^2\right) \quad,$$

$$\frac{S_4}{S_3} = G\left(\left\langle y^2 \right\rangle - 2y_0 \bar{y} + y_0^2\right) \quad,$$

$$\frac{S_5}{S_3} = G\left(\left\langle y^2 \right\rangle + 2y_0 \bar{y} + y_0^2\right) \quad.$$

$$(28)$$

Zur einfacheren Erläuterung des Prinzips wird für alle Grauverlaufsfilter (bzw. "Kanäle") ein einheitlicher Gain-Wert G angenommen. Die Scheitel-Verschiebungen sind $x_1 = x_0$, $x_2 = -x_0$, $y_4 = y_0$ und $y_5 = -y_0$. Durch Summen- und Differenzbildung erhält man folgende Gleichungen, aus denen sich in Kenntnis der Scheitelverschiebungen wiederum die Schwerpunktkoordinaten und die Spotgrößen extrahieren lassen.

$$\frac{1}{G}\left(\frac{S_2}{S_3} - \frac{S_1}{S_3}\right) = 4x_0 \bar{x} \quad,$$

$$\frac{1}{G}\left(\frac{S_2}{S_3} + \frac{S_1}{S_3}\right) = 2\left(\left\langle x^2 \right\rangle + x_0^2\right) \quad,$$

$$\frac{1}{G}\left(\frac{S_5}{S_3} - \frac{S_4}{S_3}\right) = 4y_0 \bar{y} \quad,$$

$$\frac{1}{G}\left(\frac{S_5}{S_3} + \frac{S_4}{S_3}\right) = 2\left(\left\langle y^2 \right\rangle + y_0^2\right) \quad.$$

$$(29)$$

Das vorstehend beschriebene Schema kann zur Messung von Momenten höherer Ordnung beliebig fortgesetzt werden. Die auf den Schwerpunkt bezogenen Momente

$$\overline{m}_{k,l} = \int_{-\infty}^{+\infty} dx\, dy\, I_{FF}(x,y)(x - \bar{x})^k (y - \bar{y})^l \quad, \quad k,l > 1 \qquad (30)$$

repräsentieren dabei die Formaspekte der Intensitätsverteilung (3. Momente: "Schiefe", 4. Momente: Wölbung bzw. "Kurtosis", ...).

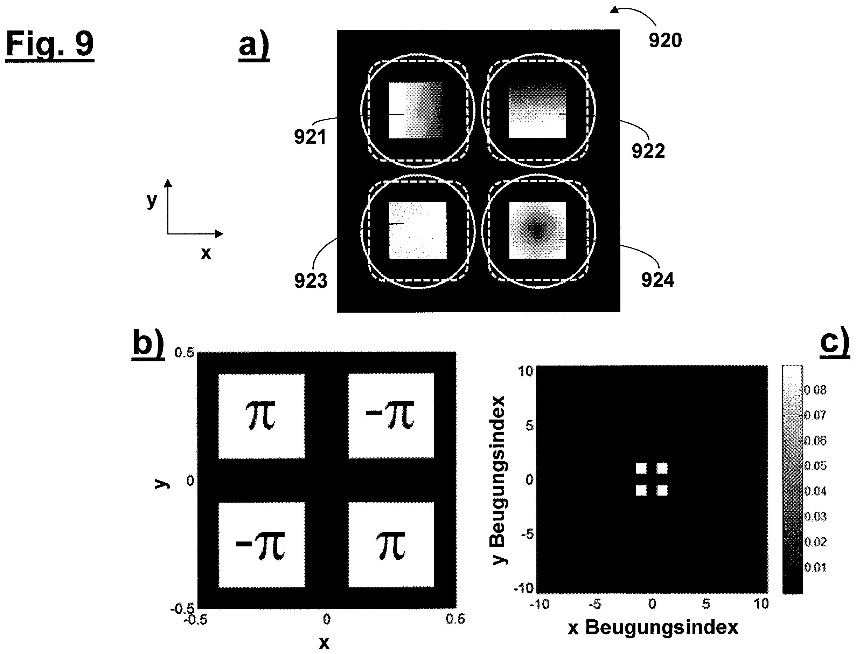

Im Weiteren wird unter Bezugnahme auf Fig. 9a-c eine Ausführungsform einer Grauverlaufsfilter-Anordnung 920 unter Verwendung von vier Grauverlaufsfiltern 921-924 näher betrachtet. Dabei weist die Grauverlaufsfilter-Anordnung 920 gemäß Fig. 9a einen ersten Grauverlaufsfilter 921 mit linearem Transmissionsverlauf in x-Richtung, einen zweiten Grauverlaufsfilter 922 mit linearem Transmissionsverlauf in y-Richtung, einen dritten Grauverlaufsfilter 923 mit konstantem Transmissionsverlauf als Referenz sowie einen vierten Grauverlaufsfilter 924 mit rotationsparaboloidförmigem Transmissionsverlauf auf, womit die Strahlparameter $\bar{x}$, $\bar{y}$ und $w^2 = w_x^2 + w_y^2$ nach Fokussierung messtechnisch zugänglich werden.

Die vollen Kreise in Fig. 9a symbolisieren die Linsen der auf die Grauverlaufsfilter-Anordnung 920 folgenden Linsen-Anordnung, und die gestrichelt gerundeten Quadrate symbolisieren die Lichtintensitätssensoren der Lichtintensitätssensoren-Anordnung. Eine parasitäre nullte Beugungsordnung sowie die höheren parasitären Beugungsordnung werden nicht transmittiert.

Zur eingangs bereits beschriebenen Aufspaltung des zu analysierenden Lichtstrahls wird ein 2D-Gitter benötigt, welches die Energie in die vier ersten diagonalen Beugungsordnungen konzentriert. Hierzu kann ein in Fig. 9c angedeutetes hybrides (d.h. als kombiniertes Amplituden-Phasen-DOE ausgestaltetes) binäres Gitter (Schachbrett-Gitterdesign) verwendet werden, wie es in Fig. 9b-c dargestellt ist. Fig. 9b zeigt eine Elementarzelle des auf eine Energiekonzentration in den ersten vier diagonalen Beugungsordnungen optimierten hybriden Schachbrettgitters. Weiße Bereiche besitzen die Transmission 1 und haben eine konstante Phase entsprechend dem im Feld angegebenen Wert. Fig. 9c zeigt die Stärke der Beugungsordnung. Durch das spezielle Gitterdesign werden 89% der transmittierten Energie in die vier ersten diagonalen Beugungsordnungen konzentriert. Insbesondere treten für ein ideal gefertigtes Gitter weder die nullte noch sämtliche höheren Beugungsordnungen auf.

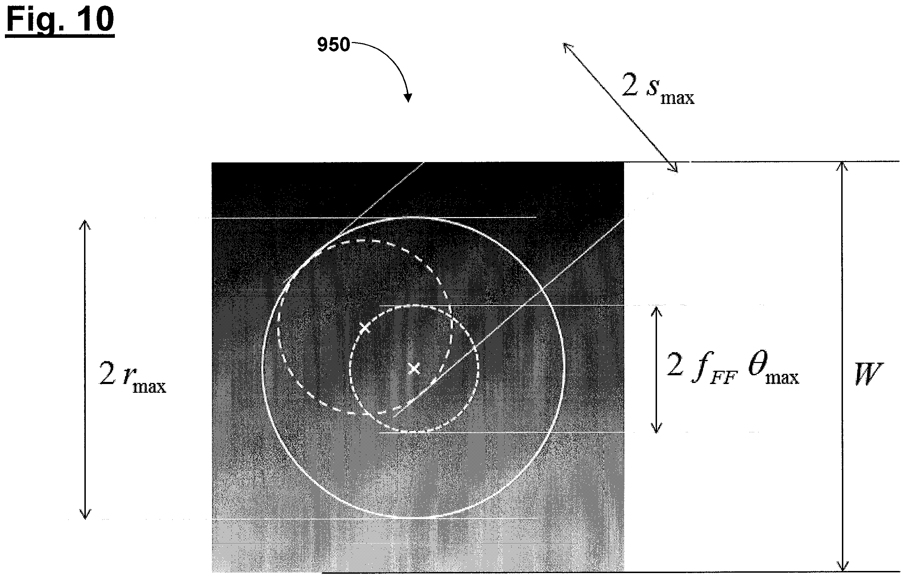

Eine exemplarische Auslegung eines Grauverlaufsfilters 950 ist in Fig. 10 veranschaulicht. Die die Auslegung bestimmenden Parameter sind:

- Radius $s_{max}$ des Intensitätsgebildes. Dieser wird maßgeblich durch die Grundeigenschaften des Strahls (Öffnung, Divergenz) und seiner Variationen (Aberrationen, Fokusvariation, usw.) bestimmt und ist derart zu definieren, dass benachbarte replizierte Intensitätsgebilde, deren Begrenzungskreise sich gerade gegenseitig berühren, niemals während des Betriebes störend überlagern oder gar interferieren.

- Radius $\theta_{max}$ des Bereiches im Winkelraum, der die auftretenden (und zu messenden) Strahlrichtungsvariationen beschränkt.

- Radius des Nutzbereichs im Fernfeld (=Verlaufsfilterebene) $r_{max}$. Entsprechend der in Abbildung 21 dargestellten Geometrie gilt $r_{max} = \theta_{max} f_{FF} + s_{max}$. Darin steht $f_{FF}$ für die Brennweite der Fokussierlinse.

- Breite des Keilverlaufs $W$, in dem die Transmission von 1 auf 0 abfällt, ist damit durch $W = 2\kappa_1 r_{max}$ gegeben. Die Wahl des Überlaufparameters $\kappa_1$ (>1.5) hängt von den für die Justage oder die Systemeinrichtung benötigten Reserven ab.

- Betrag des Beugungswinkels $\Delta_\theta$ der ersten Ordnungen des replizierenden 2D-Schachbrettgitters wird durch den Abstand der Verlaufsfilterzentren von der optischen Achse bestimmt, entsprechend $f_{FF} \, \Delta_\theta = \kappa_2 \sqrt{2} \, W$, $\kappa_2 >$ 0.5. Der Faktor $\sqrt{2}$ trägt der diagonalen Kanalanordnung Rechnung. Vorteilhafterweise wird die Auswirkung einer parasitären nullten Ordnung durch einen Dunkelbereich von der Größe eines Graufilters geblockt, was $\kappa_2 \approx 1$ entspricht.

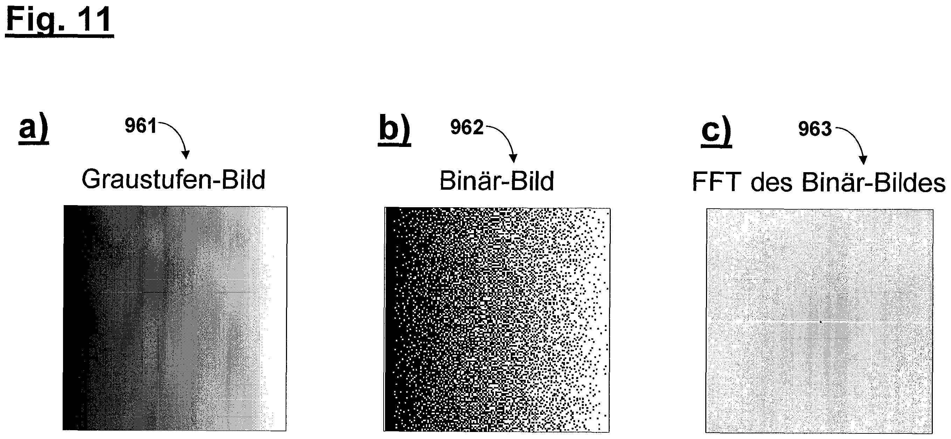

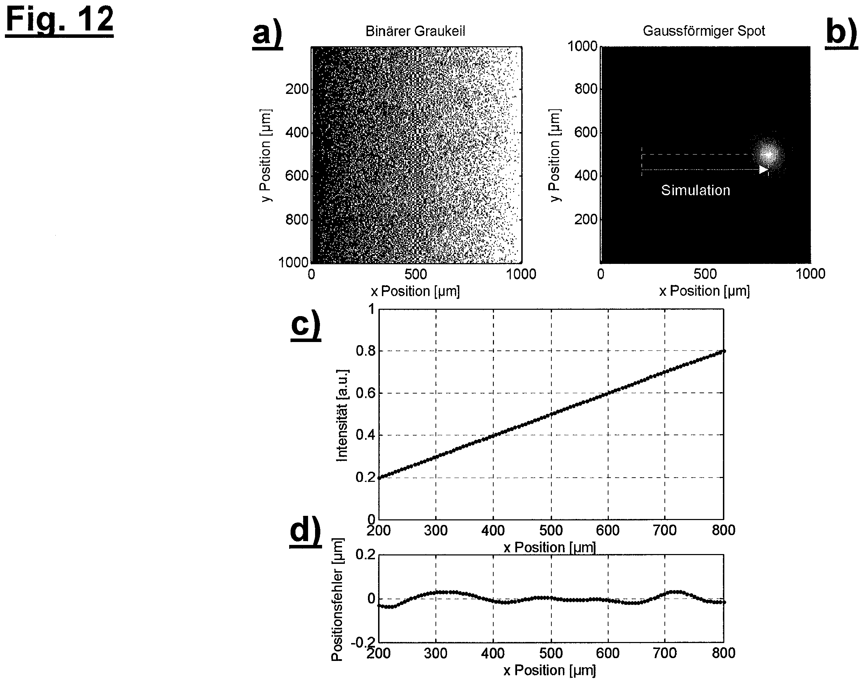

Fig. 11a-c und Fig. 12a-d zeigen schematische Darstellungen zur Erläuterung konkreter Ausführungsformen eines im Rahmen der vorliegenden Erfindung einsetzbaren Grauverlaufsfilters mit binären Sub-Wellenlängenstrukturen. Durch diese Ausführungsformen wird dem Umstand Rechnung getragen, dass bei dem erfindungsgemäßen Konzept vergleichsweise hohe Anforderungen an die Güte des bzw. der eingesetzten Grauverlaufsfilter(s) zu stellen sind, da diese die bei der Positionsmessung erzielte Genauigkeit unmittelbar bestimmt und etwaige Transmissionsverlaufsschwankungen entsprechende Messfehler in der Strahlanalyse zur Folge haben.

Bei typischen Abmessungen der gesamten Messeinrichtung und zur Erzielung hinreichend hoher Empfindlichkeiten bei der Strahlrichtungsbestimmung sind i.d.R. steile Transmissionsvariationen der eingesetzten Grauverlaufsfilter(s) über kurze Strecken erforderlich (z.B. typische Transmissionsgradienten im Bereich von 0.2mm$^{-1}$ bis 5mm$^{-1}$). Bei typischen angestrebten "Genauigkeit vs. Messbereich"-Verhältnissen von 1:1000 (z.B.: Messbereich bei der Strahlwinkelbestimmung: $\pm$1mrad bei Genauigkeit $\pm$1$\mu$rad) kann ferner z.B. gefordert sein, dass die Abweichung der lokalen Transmission nicht größer ist als 1/1000 des gesamten Transmissionsbereichs.

Bei Realisierung der o.g. binären Sub-Wellenlängenstrukturen weist z.B. jeder Grauverlaufsfilter ein planes, transmittierendes Substrat auf, auf welchem nicht transmittierende bzw. lichtundurchlässige (d.h. entweder vollständig absorbierende oder vollständig reflektierende) binäre Sub-Wellenlängenstrukturen aufgebracht sind. Lediglich beispielhaft kann ein Grauverlaufsfilter etwa eine Größe von 1mm*1mm aufweisen und mit einer Struktur aus 1000*1000 Pixeln bedruckt sein, so dass sich etwa 1$\mu$m große Strukturelemente ergeben, deren Größe somit deutlich unterhalb der beispielhaften Wellenlänge von etwa 10.6$\mu$m eines zu analysierenden Lichtstrahls im langwelligen Infrarotbereich liegt.

Anders als bei Beugungsgittern (mit Strukturen etwa von der Größe der Wellenlänge oder größer) besitzen solche Sub-Wellenlängenstrukturen eine Periode kleiner als die Wellenlänge, was dazu führt, dass keine definierte Beugung auftritt (also quasi nur die nullte Ordnung transmittiert wird). Die erfindungsgemäßen Binär-Strukturen werden nun so angeordnet, dass gemittelt über einen bestimmten Bereich (etwa entsprechend der Spotgröße des zu analysierenden Lichtstrahls) im Mittel effektive Transmissionswerte bzw. Grauwerte zwischen Null und Eins erhalten werden.

Zur Vermeidung unerwünschter Periodizitäten (welche wiederum unerwünschte Beugungseffekte zur Folge hätten) können grundsätzlich z.B. aus der Drucktechnik bekannte Verfahren (z.B. Floyd-Steinberg-Algorithmus) angewendet werden. Ein solches Verfahren wurde bei der in Fig. 11a-b gezeigten Ausführungsform angewendet. Dabei zeigt Fig. 11a den realisierten Transmissionsverlauf (Grauverlauf) 961, und Fig. 11b zeigt die hierzu verwendete Binär-Struktur 962. Wie aus der entsprechenden Fourier-Transformation 963 gemäß Fig. 11c ersichtlich, treten keine unerwünschten periodischen Strukturen auf.

Die lokale Mittelung, die nötig ist, um für die den Binär-Strukturen eine effektive lokale Transmission $T_{eff}$ zu erhalten, wird somit durch Integration über die endliche Strahlgröße realisiert:

$$T_{eff} = \frac{\int\limits_{-\infty}^{+\infty} dx\, dy\, I_0(x, y)\, T(x, y)}{\int\limits_{-\infty}^{+\infty} dx\, dy\, I_0(x, y)} \qquad (31)$$

Hierbei ist $I_0(x,y)$ die eingehende Intensitätsverteilung und $T(x,y)$ die (binäre) Transmission des Grauverlaufsfilters. Um die geforderte Linearität des Grauverlaufsfilters zu erreichen, muss eine hinreichend große Zahl von binären Strukturelementen im Integrationsbereich des Strahls liegen. Um ein "Genauigkeit vs. Messbereich"-Verhältnis von 1:1000 zu erreichen, kann der Stahl z.B. etwa 100∗100 Strukturelemente überdecken.

Gemäß Fig. 12b wandert etwa in einer Simulation für die in Fig. 12a gezeigte binäre Sub-Wellenlängenstruktur eines Grauverlaufsfilters ein gaußförmiger Lichtspot von links nach rechts, wobei sich in der Auftragung von Fig. 12c für die durch den Grauverlaufsfilter transmittierte Lichtintensität eine sehr gute Linearität (insbesondere ohne unerwünschte Granularitäten infolge der Strukturelemente) ergibt. Ein in Fig. 12d gezeigter, aus den sehr geringen Abweichungen von der Linearität resultierender Positionsfehler liegt deutlich unterhalb von $1\mu m$ über eine Strecke von etwa $600\mu m$, so dass ein sehr gutes Verhältnis von Messfehler zu Messbereich erhalten wird.

Wenn die Erfindung auch anhand spezieller Ausführungsformen beschrieben wurde, erschließen sich für den Fachmann zahlreiche Variationen und alternative Ausführungsformen, z.B. durch Kombination und/oder Austausch von Merkmalen einzelner Ausführungsformen. Dementsprechend versteht es sich für den Fachmann, dass derartige Variationen und alternative Ausführungsformen von der vorliegenden Erfindung mit umfasst sind, und die Reichweite der Erfindung nur im Sinne der beigefügten Patentansprüche und deren Äquivalente beschränkt ist.

## Patentansprüche

1. System zur Analyse eines von einer Strahlführungsoptik geführten kollimierten Lichtstrahls, mit

   • einer durch eine erste Fokussierlinse mit einer ersten Brennweite ($f_1$) gebildeten ersten Fourier-Optik (110, 510);
   • einer Grauverlaufsfilter-Anordnung (120, 520), welche bezogen auf den Strahlengang nach der ersten Fokussierlinse im Abstand der ersten Brennweite ($f_1$) angeordnet ist;
   • einer durch eine zweite Fokussierlinse mit einer zweiten Brennweite ($f_2$) gebildeten zweiten Fourier-Optik (130, 531, 532, 533), welche bezogen auf den Strahlengang nach der Grauverlaufsfilter-Anordnung (120, 520) im Abstand der zweiten Brennweite ($f_2$) angeordnet ist; und
   • einer Lichtintensitätssensor-Anordnung (140, 540), welche bezogen auf den Strahlengang nach der zweiten Fokussierlinse im Abstand der zweiten Brennweite ($f_2$) angeordnet ist, wobei die Lichtintensitätssensor-Anordnung (140, 540) mindestens einen Lichtintensitätssensor (141, 541, 542, 543) aufweist;
   • wobei die Lichtintensitätssensor-Anordnung (140, 540) derart ausgestaltet ist, dass diese für jeden Grauverlaufsfilter (121, 521, 522, 523) der Grauverlaufsfilter-Anordnung (120, 520) jeweils die durch diesen Grauverlaufsfilter transmittierte Lichtintensität misst; und
   • wobei die Grauverlaufsfilter-Anordnung einen ersten Grauverlaufsfilter (521) mit linearem Transmissionsverlauf in einer ersten Raumrichtung und einen zweiten Grauverlaufsfilter (523) mit linearem Transmissionsverlauf in einer von der ersten Raumrichtung verschiedenen zweiten Raumrichtung aufweist, und/oder wobei die Grauverlaufsfilter-Anordnung wenigstens einen Grauverlaufsfilter mit einem zumindest in einer vorbestimmten Raumrichtung parabelförmigen Transmissionsverlauf aufweist.

2. System nach Anspruch 1, **dadurch gekennzeichnet, dass** die Grauverlaufsfilter-Anordnung wenigstens einen Grauverlaufsfilter aufweist, welcher einen Transmissionsverlauf mit rotationsparabolidförmiger oder sattelförmiger Geometrie aufweist.

3. System nach Anspruch 1 oder 2, **dadurch gekennzeichnet, dass** die Grauverlaufsfilter-Anordnung wenigstens einen Grauverlaufsfilter (522) aufweist, welcher zur Ermöglichung einer Intensitätsnormierung einen konstanten Transmissionsverlauf besitzt.

4. System nach einem der vorhergehenden Ansprüche, **dadurch gekennzeichnet, dass** die Grauverlaufsfilter-Anordnung (520) ein Array aus einer Mehrzahl von Grauverlaufsfiltern (521, 522, 523) aufweist.

5. System nach einem der vorhergehenden Ansprüche, **dadurch gekennzeichnet, dass** die Lichtintensitätssensor-Anordnung (540) ein Array aus einer Mehrzahl von Lichtintensitätssensoren (541, 542, 543) aufweist.

6. System nach einem der vorhergehenden Ansprüche, **dadurch gekennzeichnet, dass** dieses eine bezogen auf die Lichtausbreitungsrichtung stromaufwärts der Grauverlaufsfilter-Anordnung (520) angeordnete strahlaufspaltende Struktur (505) zur Aufspaltung des zu analysierenden Lichtstrahls in eine Mehrzahl von Teilstrahlen aufweist.

7. System nach Anspruch 6, **dadurch gekennzeichnet, dass** diese strahlaufspaltende Struktur (505) bezogen auf den Strahlengang vor der ersten Fokussierlinse im Abstand der ersten Brennweite ($f_1$) angeordnet ist.

8. System nach einem der vorhergehenden Ansprüche, **dadurch gekennzeichnet, dass** die Grauverlaufsfilter-Anordnung wenigstens einen Grauverlaufsfilter aufweist, welcher aus Binärstrukturen gebildet ist, wobei die Strukturgrößen dieser Binärstrukturen kleiner sind als die Wellenlänge des zu analysierenden Lichtstrahls.

9. System nach einem der vorhergehenden Ansprüche, **dadurch gekennzeichnet, dass** der zu analysierende Lichtstrahl ein Laserstrahl, insbesondere ein Laserstrahl mit einer Wellenlänge im Infrarotbereich, ist.

10. Verfahren zur Analyse eines von einer Strahlführungsoptik geführten kollimierten Lichtstrahls,

    • wobei ein zu analysierender Lichtstrahl über eine durch eine erste Fokussierlinse mit einer ersten Brennweite ($f_1$) gebildete erste Fourier-Optik (110, 510) auf eine bezogen auf den Strahlengang nach der ersten Fokussierlinse im Abstand der ersten Brennweite ($f_1$) befindliche Grauverlaufsfilter-Anordnung (120, 520) fokussiert wird;

    • wobei bezogen auf den Strahlengang nach der Grauverlaufsfilter-Anordnung (120, 520) eine durch eine zweite Fokussierlinse mit einer zweiten Brennweite ($f_2$) gebildete zweite Fourier-Optik (130, 531, 532, 533) im Abstand der zweiten Brennweite ($f_2$) angeordnet ist; und

    • wobei eine Lichtintensitätssensor-Anordnung (140, 540), welche bezogen auf den Strahlengang nach der zweiten Fokussierlinse im Abstand der zweiten Brennweite ($f_2$) angeordnet ist und mindestens einen Lichtintensitätssensor (141, 541, 542, 543) aufweist, für jeden Grauverlaufsfilter (121, 521, 522, 523) der Grauverlaufsfilter-Anordnung (120, 520) jeweils die durch diesen Grauverlaufsfilter transmittierte Lichtintensität misst;

    • wobei die Grauverlaufsfilter-Anordnung einen ersten Grauverlaufsfilter (521) mit linearem Transmissionsverlauf in einer ersten Raumrichtung und einen zweiten Grauverlaufsfilter (523) mit linearem Transmissionsverlauf in einer von der ersten Raumrichtung verschiedenen zweiten Raumrichtung aufweist, und/oder wobei die Grauverlaufsfilter-Anordnung wenigstens einen Grauverlaufsfilter mit einem zumindest in einer vorbestimmten Raumrichtung parabelförmigen Transmissionsverlauf aufweist.

11. Verwendung eines Grauverlaufsfilters in einem System nach einem der Ansprüche 1 bis 9, wobei der Grauverlaufsfilter aus Binärstrukturen gebildet ist, und wobei die Strukturgrößen dieser Binärstrukturen kleiner sind als die Wellenlänge eines zu analysierenden Lichtstrahls.

12. Verwendung eines Grauverlaufsfilters nach Anspruch 11, **dadurch gekennzeichnet, dass** der zu analysierende Lichtstrahl eine Wellenlänge im Infrarotbereich besitzt.

**Claims**

1. System for analysing a collimated light beam guided by a beam guiding optical unit, comprising

• a first Fourier optical unit (110, 510) which is formed by a first focusing lens element having a first focal length ($f_1$);
• a graduated neutral density filter arrangement (120, 520) which in relation to the beam path is arranged downstream of the first focusing lens element at the distance of the first focal length ($f_1$);
• a second Fourier optical unit (130, 531, 532, 533) which is formed by a second focusing lens element having a second focal length ($f_2$) and which in relation to the beam path is arranged downstream of the graduated neutral density filter arrangement (120, 520) at the distance of the second focal length ($f_2$); and
• a light intensity sensor arrangement (140, 540) which in relation to the beam path is arranged downstream of the second focusing lens element at the distance of the second focal length ($f_2$), the light intensity sensor arrangement (140, 540) having at least one light intensity sensor (141, 541, 542, 543);
• wherein the light intensity sensor arrangement (140, 540) is designed such that it measures, for each graduated neutral density filter (121, 521, 522, 523) of the graduated neutral density filter arrangement (120, 520), in each case the light intensity transmitted by said graduated neutral density filter; and
• wherein the graduated neutral density filter arrangement has a first graduated neutral density filter (521) with a linear transmission profile in a first spatial direction and a second graduated neutral density filter (523) with a linear transmission profile in a second spatial direction, which differs from the first spatial direction, and/or wherein the graduated neutral density filter arrangement has at least one graduated neutral density filter with a transmission profile that is parabolic at least in a predetermined spatial direction.

2. System according to Claim 1, **characterized in that** the graduated neutral density filter arrangement has at least one graduated neutral density filter with a transmission profile that has a geometry in the shape of a paraboloid of revolution or a saddle-shaped geometry.

3. System according to Claim 1 or 2, **characterized in that** the graduated neutral density filter arrangement has at least one graduated neutral density filter (522) with a constant transmission profile for enabling an intensity normalization.

4. System according to any of the preceding claims, **characterized in that** the graduated neutral density filter arrangement (520) has an array composed of a plurality of graduated neutral density filters (521, 522, 523).

5. System according to any of the preceding claims, **characterized in that** the light intensity sensor arrangement (540) has an array composed of a plurality of light intensity sensors (541, 542, 543).

6. System according to any of the preceding claims, **characterized in that** it has a beam-splitting structure (505) for splitting the light beam to be analysed into a plurality of component beams, said structure in relation to the light propagation direction being arranged upstream of the graduated neutral density filter arrangement (520).

7. System according to Claim 6, **characterized in that** said beam-splitting structure (505) in relation to the beam path is arranged upstream of the first focusing lens element at the distance of the first focal length ($f_1$).

8. System according to any of the preceding claims, **characterized in that** the graduated neutral density filter arrangement has at least one graduated neutral density filter which is formed from binary structures, with the structure dimensions of said binary structures being smaller than the wavelength of the light beam to be analysed.

9. System according to any of the preceding claims, **characterized in that** the light beam to be analysed is a laser beam, in particular a laser beam with a wavelength in the infrared range.

10. Method for analysing a collimated light beam guided by a beam guiding optical unit,

• wherein a light beam to be analysed is focused by way of a first Fourier optical unit (110, 510), which is formed by a first focusing lens element having a first focal length ($f_1$), on a graduated neutral density filter arrangement (120, 520) which in relation to the beam path is situated downstream of the first focusing lens element at the distance of the first focal length ($f_1$);
• wherein a second Fourier optical unit (130, 531, 532, 533), which is formed by a second focusing lens element having a second focal length ($f_2$), in relation to the beam path is arranged downstream of the graduated neutral density filter arrangement (120, 520) at the distance of the second focal length ($f_2$); and
• wherein a light intensity sensor arrangement (140, 540), which in relation to the beam path is arranged downstream of the second focusing lens element at the distance of the second focal length ($f_2$) and which has at least one light intensity sensor (141, 541, 542, 543), measures, for each graduated neutral density filter (121, 521, 522, 523) of the graduated neutral density filter arrangement (120, 520), in each case the light intensity transmitted by this graduated neutral density filter;
• wherein the graduated neutral density filter arrangement has a first graduated neutral density filter (521) with a linear transmission profile in a first spatial direction and a second graduated neutral density filter (523) with a linear transmission profile in a second spatial direction, which differs from the first spatial direction, and/or wherein the graduated neutral density filter arrangement has at least one graduated neutral density filter with a transmission profile that is parabolic at least in a predetermined spatial direction.

**11.** Use of a graduated neutral density filter in a system according to any of Claims 1 to 9, wherein the graduated neutral density filter is formed from binary structures, and wherein the structure dimensions of said binary structures are smaller than the wavelength of a light beam to be analysed.

**12.** Use of a graduated neutral density filter according to Claim 11, **characterized in that** the light beam to be analysed has a wavelength in the infrared range.

## Revendications

**1.** Système permettant d'analyser un faisceau lumineux collimaté guidé par une optique de guidage de faisceau, comprenant

• une première optique de Fourier (110, 510) formée par une première lentille de focalisation ayant une première focale ($f_1$) ;
• un agencement de filtre gradué neutre (120, 520) qui est disposé après la première lentille de focalisation à la distance de la première focale ($f_1$) par rapport à la trajectoire du faisceau ;
• une deuxième optique de Fourier (130, 531, 532, 533) formée par une deuxième lentille de focalisation ayant une deuxième focale ($f_2$) qui est disposée après l'agencement de filtre gradué neutre (120, 520) à la distance de la deuxième focale ($f_2$) par rapport à la trajectoire du faisceau ; et
• un agencement de capteur d'intensité de lumière (140, 540) qui est disposé après la deuxième lentille de focalisation à la distance de la deuxième focale ($f_2$) par rapport à la trajectoire du faisceau, dans lequel l'agencement de capteur d'intensité de lumière (140, 540) présente au moins un capteur d'intensité de lumière (141, 541, 542, 543) ;
• dans lequel l'agencement de capteur d'intensité de lumière (140, 540) est configuré de telle sorte qu'il mesure pour chaque filtre gradué neutre (121, 521, 522, 523) de l'agencement de filtre gradué neutre (120, 520) respectivement l'intensité de lumière transmise à travers ce filtre gradué neutre ; et
• dans lequel l'agencement de filtre gradué neutre présente un premier filtre gradué neutre (521) ayant une courbe de transmission linéaire dans une première direction spatiale et un deuxième filtre gradué neutre (523) ayant une courbe de transmission linéaire dans une deuxième direction spatiale différente de la première direction spatiale, et/ou dans lequel l'agencement de filtre gradué neutre présente au moins un filtre gradué neutre ayant une courbe de transmission parabolique au moins dans une direction spatiale prédéterminée.

**2.** Système selon la revendication 1, **caractérisé en ce que** l'agencement de filtre gradué neutre présente au moins un filtre gradué neutre qui présente une courbe de transmission ayant une géométrie en forme de paraboloïde de révolution ou en forme de selle.

**3.** Système selon la revendication 1 ou 2, **caractérisé en ce que** l'agencement de filtre gradué neutre présente au moins un filtre gradué neutre (522) qui dispose d'une courbe de transmission constante afin de permettre une normalisation de l'intensité.

**4.** Système selon l'une quelconque des revendications précédentes, **caractérisé en ce que** l'agencement de filtre gradué neutre (520) présente un réseau d'une pluralité de filtres gradués neutres (521, 522, 523).

**5.** Système selon l'une quelconque des revendications précédentes, **caractérisé en ce que** l'agencement de capteur d'intensité de lumière (540) présente un réseau d'une pluralité de capteurs d'intensité de lumière (541, 542, 543).

**6.** Système selon l'une quelconque des revendications précédentes, **caractérisé en ce qu'**il présente une structure (505) de séparation de faisceau, disposée en amont de l'agencement de filtre gradué neutre (520) par rapport à la direction de propagation de la lumière, afin de séparer le faisceau lumineux à analyser en une pluralité de faisceaux partiels.

7. Système selon la revendication 6, **caractérisé en ce que** cette structure de séparation de faisceau (505) est disposée devant la première lentille de focalisation à la distance de la première focale ($f_1$) par rapport à la trajectoire du faisceau.

8. Système selon l'une quelconque des revendications précédentes, **caractérisé en ce que** l'agencement de filtre gradué neutre présente au moins un filtre gradué neutre qui est formé par des structures binaires, dans lequel les dimensions de structure de ces structures binaires sont inférieures à la longueur d'onde du faisceau lumineux à analyser.

9. Système selon l'une quelconque des revendications précédentes, **caractérisé en ce que** le faisceau lumineux à analyser est un faisceau laser, en particulier un faisceau laser ayant une longueur d'onde dans le domaine des infrarouges.

10. Procédé permettant d'analyser un faisceau lumineux collimaté guidé par une optique de guidage de faisceau

    • dans lequel un faisceau lumineux à analyser est focalisée par une première optique de Fourier (110, 510) formée par une première lentille de focalisation ayant une première focale ($f_1$) sur un agencement de filtre gradué neutre (120, 520) se trouvant après la première lentille de focalisation à la distance de la première focale ($f_1$) par rapport à la trajectoire du faisceau ;
    • dans lequel, par rapport à la trajectoire du faisceau, après l'agencement de filtre gradué neutre (120, 520), une deuxième optique de Fourier (130, 531, 532, 533) formée par une deuxième lentille de focalisation est disposée à la distance de la deuxième focale ($f_2$) ;
    • dans lequel un agencement de capteur d'intensité de lumière (140, 540), qui est disposé après la deuxième lentille de focalisation à la distance de la deuxième focale ($f_2$) par rapport à la trajectoire du faisceau et présente au moins un capteur d'intensité de lumière (141, 541, 542, 543), mesure pour chaque filtre gradué neutre (121, 521, 522, 523), l'agencement de filtre gradué neutre (120, 520) respectivement l'intensité de lumière transmise à travers ce filtre gradué neutre ;
    • dans lequel l'agencement de filtre gradué neutre présente un premier filtre gradué neutre (521) ayant une courbe de transmission linéaire dans une première direction spatiale, et un deuxième filtre gradué neutre (523) ayant une courbe de transmission linéaire dans une deuxième direction spatiale différente de la première direction spatiale, et/ou dans lequel l'agencement de filtre gradué neutre présente au moins un filtre gradué neutre ayant au moins une courbe de transmission parabolique dans une direction spatiale prédéterminée.

11. Utilisation d'un filtre gradué neutre dans un système selon l'une quelconque des revendications 1 à 9, dans lequel le filtre gradué neutre est formé par des structures binaires, et dans lequel les dimensions de structure de ces structures binaires sont inférieures à la longueur d'onde d'un faisceau lumineux à analyser.

12. Utilisation d'un filtre gradué neutre selon la revendication 11, **caractérisé en ce que** le faisceau lumineux à analyser dispose d'une longueur d'onde dans le domaine des infrarouges.

Fig. 1

EP 3 140 628 B1

## Fig. 2

## Fig. 3

EP 3 140 628 B1

# Fig. 4

**a)** Konstante

**b)** x-Keil

**c)** y-Keil

**d)** d1-Keil

**e)** d2-Keil

**f)** radiale Parabel

**g)** x-Parabel

**h)** y-Parabel

**i)** Sattel

y

x

Fig. 5

a)

b)

Fig. 6

# Fig. 7

# Fig. 8

EP 3 140 628 B1

a)

821

b)

822

c)

823

d)

824

Fig. 9

a)

920

921    922

923    924

b)

c)

EP 3 140 628 B1

## Fig. 10

# Fig. 11

a) 961 → **Graustufen-Bild**

b) 962 → **Binär-Bild**

c) 963 → **FFT des Binär-Bildes**

Fig. 12

# Fig. 13

## Stand der Technik

EP 3 140 628 B1

Fig. 14

Stand der Technik

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014208792
- US 8237922 B2
- US 5329350 A
- US 4037959 A
- US 3538335 A